(19) Europäisches Patentamt
European Patent Office
Office européen des brevets

(11) EP 3 796 541 B1

(12) **EUROPEAN PATENT SPECIFICATION**

(45) Date of publication and mention of the grant of the patent:
**28.02.2024 Bulletin 2024/09**

(51) International Patent Classification (IPC):
**H02M 7/5395** (2006.01)    **H02M 7/5387** (2007.01)
**H02P 27/08** (2006.01)

(21) Application number: **20196879.9**

(22) Date of filing: **18.09.2020**

(52) Cooperative Patent Classification (CPC):
**H02M 7/5395; H02M 7/5387; H02P 27/085;**
Y02E 10/76

(54) **METHOD OF CONTROLLING SWITCHING FREQUENCY OF WIND POWER CONVERTER AND CONTROL DEVICE AND POWER GENERATION SYSTEM USING THE SAME**

VERFAHREN ZUR STEUERUNG DER SCHALTFREQUENZ EINES WINDENERGIEWANDLERS UND STEUERUNGSVORRICHTUNG UND STROMERZEUGUNGSSYSTEM DAMIT

PROCÉDÉ DE COMMANDE DE FRÉQUENCE DE COMMUTATION D'UN CONVERTISSEUR D'ÉNERGIE ÉOLIENNE ET DISPOSITIF DE COMMANDE DE PUISSANCE ET SYSTÈME DE GÉNÉRATION DE PUISSANCE L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.09.2019 CN 201910894388**
**27.08.2020 CN 202010876941**

(43) Date of publication of application:
**24.03.2021 Bulletin 2021/12**

(73) Proprietor: **Delta Electronics (Shanghai) Co., Ltd.**
**Shanghai 201209 (CN)**

(72) Inventors:
• **DONG, Mingxuan**
**SHANGHAI, 201209 (CN)**
• **WANG, Changyong**
**SHANGHAI, 201209 (CN)**
• **CHEN, Li**
**SHANGHAI, 201209 (CN)**
• **GUO, Chaowei**
**SHANGHAI, 201209 (CN)**

(74) Representative: **Cabinet Beau de Loménie**
**158, rue de l'Université**
**75340 Paris Cedex 07 (FR)**

(56) References cited:
**EP-A1- 3 327 918**    **WO-A1-2017/013125**
**US-A1- 2010 250 067**

• **XIANG DAWEI ET AL: "Switching Frequency Dynamic Control for DFIG Wind Turbine Performance Improvement Around Synchronous Speed", IEEE TRANSACTIONS ON POWER ELECTRONICS, INSTITUTE OF ELECTRICAL AND ELECTRONICS ENGINEERS, USA, vol. 32, no. 9, 1 September 2017 (2017-09-01), pages 7271-7283, XP011647403, ISSN: 0885-8993, DOI: 10.1109/TPEL.2016.2628377 [retrieved on 2017-04-24]**

Description

**TECHNICAL FIELD**

The present disclosure relates to power electronics technology, more particularly, to a method of controlling a switching frequency of a wind power converter, a control device using the method, a wind power generation system using the method, a medium thereof and an electronic device using the same.

**BACKGROUND**

In order to increase generating capacity at a low wind speed, it is required that a wind power converter can operate for a long-term when a rotor of a wind power generator runs at a speed approximate to a synchronous rotating-speed. When the rotor of the wind power generator is at a rotating-speed approximate to a synchronous rotating-speed, current of the rotor is approximate to direct current (DC), and the loss is large, but reducing the switching frequency of a double-fed wind power converter can reduce the loss.

In the related technology, the switching frequency of the double-fed wind power converter may be reduced by modifying peripheral configuration of a control chip. For example, switching frequencies, control parameters or filtering parameters may be switched online. In order to use such methods, the installed wind power generators have to be changed greatly, the processes of switching the controlling parameters are complicated, and the reliability is low, which is not conducive to later development.

Reducing switching frequencies of wind power converters by combining with the operating characteristics of the wind power converters without changing the present control parameters and system configuration, is a technical problem that urgently needs to be solved.

It should be noted that information disclosed in this part are provided only for acquiring a better understanding of the background of the present application and therefore may include information that is not present technology already known to those of ordinary skill in the art.

XIANG DAWEI ET AL: "Switching Frequency Dynamic Control for DFIG Wind Turbine Performance Improvement Around Synchronous Speed", IEEE TRANSACTIONS ON POWER ELECTRONICS, INSTITUTE OF ELECTRICAL AND ELECTRONICS ENGINEERS, USA, vol. 32, no. 9, 1 September 2017 (2017-09-01), pages 7271-7283, XP011647403, ISSN: 0885-8993, 001: 10.11 09ITPEL.2016.2628377, discloses a doubly-fed induction generator (DFIG) wind turbine (WT), large thermal and mechanical oscillations occur around synchronous speed due to the nearly zero-frequency current circulating between rotor windings and rotor-side converter (RSC).

US 2010/250067 A1 (MATSUMURA TATSUO [JP] ET AL) 30 September 2010 (2010-09-30), discloses a vehicular steering control apparatus and method, wherein a carrier frequency of a PWM control signal to drive an electric motor on a basis of the manipulated variable of the electric motor is controlled.

EP 3 327 918 A1 (HITACHIINDUSTRY EQUIPMENT SYSTEMS CO LTD [JP]) 30 May 2018 (2018-05-30), discloses a method for reducing output current noise in a power conversion device.

WO 2017/013125 A1 (ABB SCHWEIZ AG [CH]) 26 January 2017 (2017-01-26), discloses A method for controlling a three-phase electrical converter.

**SUMMARY**

An objective of the present disclosure is to provide a method of controlling a switching frequency of a wind power converter, a control device using the method, a wind power generation system using the method, a medium thereof and an electronic device using the same, thereby overcoming, at least to some extent, one or more problems caused by the limitations and defects of related technologies. The invention is defined by a method of controlling a switching frequency of a wind power converter according to claim 1, a control device of a wind power converter according to claim 8, and a wind power generation system according to claim 11. Further embodiments are defined by the dependent claims.

The technical solutions provided by the embodiments of the present disclosure have at least the following beneficial effects.

The technical solution of the present disclosure adjusts the amplitude of the modulation voltage in the k consecutive switching cycles, generates a PWM pulse signal according to the adjusted modulation voltage, and reduces the switching frequency of the wind power converter by periodic changes in duty cycles.

It is to be understood that both the foregoing general description and the following detailed description are exemplary and explanatory only and are not restrictive of the present disclosure, as claimed.

## BRIEF DESCRIPTION OF THE DRAWINGS

The accompanying drawings, which are incorporated in and constitute part of this specification, illustrate embodiments consistent with the present disclosure and, together with the description, serve to explain the principles of the present disclosure. Apparently, the drawings in the following description are only for illustrating some embodiments of the present disclosure and those of ordinary skill in the art can also derive other drawings based on the drawings without paying any creative labor.

FIG. 1 is a flowchart schematically showing a method of controlling a switching frequency of a wind power converter according to an embodiment of the present disclosure;

FIG. 2 is a diagram schematically showing a wind power generation system according to an embodiment of the present disclosure;

FIG. 3 is a flowchart schematically showing the adjustment of the modulation voltage according to an embodiment of the present disclosure;

FIG. 4 is a waveform diagram schematically illustrating each signal when $U_x$ is located at section 1 according to an embodiment of the present disclosure;

FIG. 5 is a waveform diagram schematically illustrating each signal when $U_x$ is located at section 2 according to an embodiment of the present disclosure;

FIG. 6A is a diagram schematically illustrating a wind power generation system according to another embodiment of the present disclosure;

FIG. 6B is a flowchart schematically illustrating the adjustment of the modulation voltage according to another embodiment of the present disclosure;

FIG. 7 is a waveform diagram schematically illustrating each signal when $U_x$ is located at section 1 according to further another embodiment of the present disclosure;

FIG. 8 is a waveform diagram schematically illustrating each signal when $U_x$ is located at section 2 according to further another embodiment of the present disclosure;

FIG. 9 is a waveform diagram schematically illustrating each signal when $U_x$ is located at section 3 according to further another embodiment of the present disclosure;

FIG. 10 is a waveform diagram schematically illustrating each signal when $U_x$ is located at section 1 according to still another embodiment of the present disclosure;

FIG. 11 is a waveform diagram schematically illustrating each signal when $U_x$ is located at section 2 according to still another embodiment of the present disclosure;

FIG. 12 is a waveform diagram schematically illustrating each signal when $U_x$ is located at section 3 according to still another embodiment of the present disclosure;

FIG. 13 is a waveform diagram schematically illustrating each signal when $U_x$ is located at section 4 according to still another embodiment of the present disclosure;

FIG. 14 is a waveform diagram schematically illustrating each signal when $U_x$ is located at section 1 according to still another embodiment of the present disclosure;

FIG. 15 is a waveform diagram schematically illustrating each signal when $U_x$ is located at section 2 according to still another embodiment of the present disclosure;

FIG. 16 is a waveform diagram schematically illustrating each signal when $U_x$ is located at section 3 according to still another embodiment of the present disclosure;

FIG. 17 is a waveform diagram schematically illustrating each signal when $U_x$ is located at section 4 according to still another embodiment of the present disclosure;

FIG. 18 is a block diagram schematically illustrating a control device of a wind power converter according to an embodiment of the present disclosure; and

FIG. 19 is a structural diagram schematically showing a computer system suitable for implementing an electronic device according to an embodiment of the present disclosure.

## DETAILED DESCRIPTION

Embodiments will now be described more fully by reference to the accompanying drawings. In the following description, many specific details are provided for fully understanding embodiments of the present disclosure. However, it will be appreciated by those skilled in the art that technical solutions of the present disclosure can be practiced without one or more of the specific details, or, other methods, components, devices and steps may be used. Under other circumstances, well-known methods, devices, implementations or operations will not be illustrated or described in detail, to avoid obscuration of various aspects of the present disclosure.

The block diagrams shown in the drawings are merely functional entities, and are not necessarily corresponding to physically separate entities. That is, the functional entities can be implemented in the form of software, or in one or more hardware modules or integrated circuits, or in different networks and/or processor devices and/or microcontroller devices.

The flowcharts shown in the drawings are only illustrations, and are neither necessarily including all contents or operations/steps, nor performed in the described order. For example, some of the operations/steps may be divided, and some of them may be combined or partially combined, so the actual order may be changed according to actual conditions.

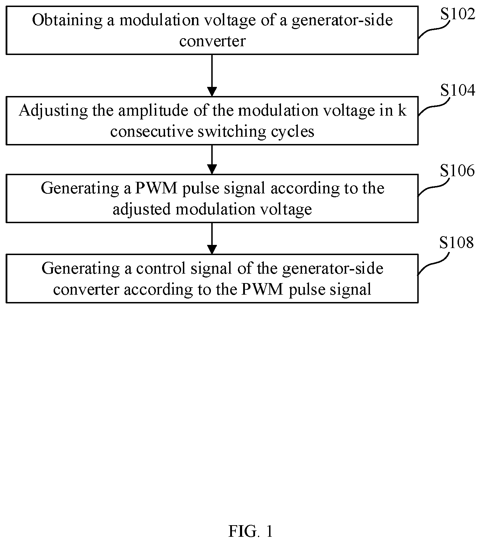

FIG. 1 schematically shows a method of controlling a wind power converter according to an embodiment of the present disclosure. As shown in FIG. 1, the method includes the following steps.

In step S101, a modulation voltage of a generator-side converter is obtained.

In step S102, an amplitude of the modulation voltage in k consecutive switching cycles is adjusted.

In step S103, a PWM (Pulse Width Modulation) pulse signal is generated according to the adjusted modulation voltage. A frequency of the generated PWM pulse signal is 1/k of that of a first PWM pulse signal, wherein k is an integer equal to or greater than 2. The frequency of the first PWM pulse signal represents a frequency of a PWM pulse signal generated when the modulation voltage is not adjusted, that is, original.

In step S104, a control signal of the generator-side converter is generated according to the PWM pulse signal.

In the technical solution of the embodiment of the present disclosure, by adjustment of the amplitude of the modulation voltage in k consecutive switching cycles, the adjusted modulation voltage, which is used as a modulation wave, is compared with a carrier wave, and the frequency of the generated PWM pulse signal is 1/k of the frequency of the original PWM pulse signal. Namely, the switching frequency is reduced to 1/k, thus reducing the switching frequency of the generator-side converter of the wind power converter.

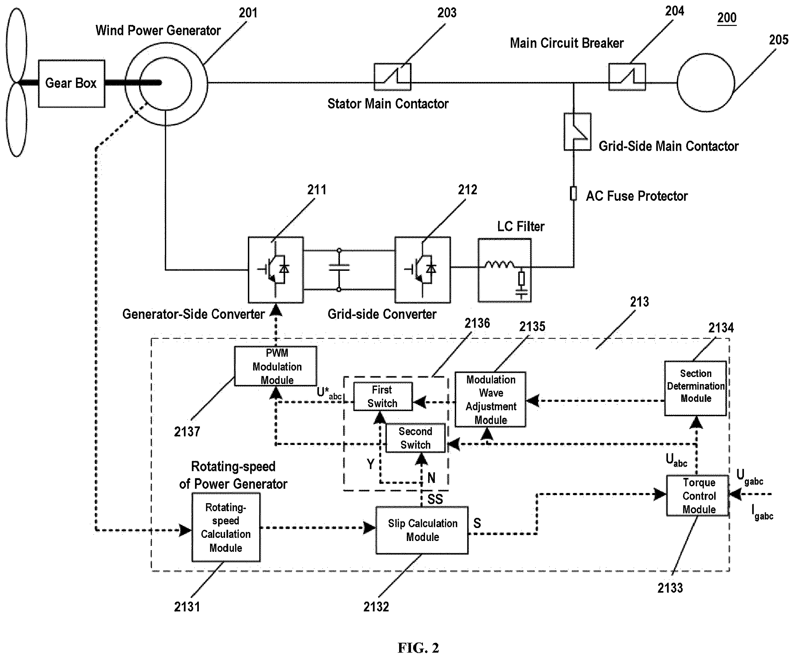

FIG. 2 schematically shows a wind power generation system 200. Referring to FIGs. 1 and 2, the wind power generation system 200 includes a wind power generator 201 and a converter. A stator winding of the wind power generator is coupled to a power grid 205 through a stator main contactor 203 and a main circuit breaker 204. A rotor winding of the wind power generator is coupled to the converter. The converter mainly includes a generator-side converter 211, a grid-side converter 212 and a control device 213. The generator-side converter 211 is connected to the DC side of the grid-side converter 212 to form a back-to-back connection. The grid-side converter 212 is coupled to the stator winding through an inductor-capacitor (LC) filter, an alternating current (AC) fuse protector and a grid-side main contactor. Electric energy generated by the stator winding and the rotor winding is transmitted to the power grid. The operation mechanism of the wind power generation system is not the focus of the present disclosure, and thus will not be elaborated here.

The control device 213 includes a rotating-speed calculation module 2131, a slip calculation module 2132, a torque control module 2133, a section determination module 2134, a modulation wave adjustment module 2135, a selection module 2136 and a PWM modulation module 2137. The rotating-speed calculation module 2131 is coupled to the wind power generator 201, for calculating a rotating-speed n of the wind power generator. The slip calculation module 2132 is coupled to the rotating-speed calculation module, and configured to calculate a slip S according to the rotating-speed n and a synchronous rotating-speed $n_0$, and compare the slip S with a threshold. The rotating-speed n is close to or equal to the synchronous rotating-speed $n_0$ when the slip S is equal to or less than the threshold; and the rotating-speed n is greater than the synchronous rotating-speed $n_0$ when the slip S is greater than the threshold. The threshold is equal to 0.01, but the present disclosure is not limited to this, and it can be flexibly set according to actual needs. The torque control module 2133 is coupled to the slip calculation module and a sampling module, and configured to obtain a three-phase modulation voltage $U_{abc}$ according to the slip S, a power grid voltage $u_{gabc}$ and a power grid current $i_{gabc}$. The sampling module (not shown) may be located within the control device, or may be an external sampling module. The torque control module 2133 may also be referred to as a modulation wave acquisition module, which is configured to output a modulation wave or a modulation wave signal, i.e., a modulation voltage. The section determination module 2134 is coupled to the torque control module 2133, and configured to receive the three-phase modulation voltage $U_{abc}$ and determine a section at which the three-phase modulation voltage is located. In this invention, we can section the value range of the modulation voltage (eg. 0~1) to form a number of intervals, and each of the invertals is called Section i, i=1,2...

The modulation wave adjustment module 2135 is coupled to the torque control module and the section determination module, and configured to receive the three-phase modulation voltage $U_{abc}$ output by the torque control module and adjust it according to the section output by the section determination module 2134 to obtain the adjusted three-phase modulation voltage signal $U^{*}_{abc}$. The selection module 2136 is coupled to the slip calculation module, the torque control module and the modulation wave adjustment module, and configured to receive the determination result SS output by the slip calculation module and select to output the modulation voltage $U_{abc}$ or $U^{*}_{abc}$ according to the determination result SS. As shown in FIG. 2, the selection module 2136 is composed of a first switch and a second switch. When the determination result SS of the slip calculation module is Y (Yes), the first switch is turned on and the second switch is turned off, thereby outputting the three-phase modulation voltage $U^{*}_{abc}$; and when the determination result SS of the slip calculation module is N (No), the first switch is turned off and the second switch is turned on, thereby outputting the three-phase modulation voltage $U_{abc}$. This is only an implementation manner of the selection module, and the present disclosure is not limited thereto. The PWM modulation module 2137 receives the modulation voltage output by the selection module, compares the modulation voltage, which is used as a modulation wave signal, with a carrier wave to obtain a PWM pulse signal. A control signal of the generator-side converter is generated according to the PWM pulse signal. The PWM modulation module may generate a pulse signal by for example SPWM (Sinusoidal PWM) or SVPWM (Space Vector PWM) technology, but it is not limited thereto.

The control device 213 further includes a control signal generation module (not shown) which is coupled to the PWM modulation module and configured to generate a control signal for each switching device in a generator-side converter according to the PWM pulse signal. Electric energy conversion can be realized by a switching operation of the switching devices. For example, by inverting the PWM pulse signal and adding dead zone control, two sets of control signals are obtained, which are control signals of an upper bridge arm switch and a lower bridge arm switch of a corresponding bridge arm, respectively.

The torque control module may use other control loops or controllers, such as a power control loop, a voltage and current control loop as well, as long as the modulation signal can be obtained.

It should be noted that there is also another control logic in the present disclosure: whether to execute the function of adjusting the modulation wave is selected according to the determination result SS of the slip calculation module. Specifically, if the determination result SS is Y, the function of adjusting the modulation wave is executed, that is, the section determination module and the modulation wave adjustment module are activated, and the adjusted three-phase modulation voltage $U^*_{abc}$ is output to the PWM modulation module; and if the determination result SS is N, the function of adjusting the modulation wave is not executed, that is, the section determination module and the modulation wave adjustment module are shielded, and the original three-phase modulation voltage $U_{abc}$ is directly output to the PWM modulation module.

When the rotor of the wind power generator runs at a speed approximate to a synchronous rotating-speed, the generator-side converter operates in a DC state, and the three-phase modulation voltage $U_{abc}$ is approximate to a fixed value. The amplitude of the modulation voltage $U_{abc}$ every $T/2$ is adjusted to obtain a three-phase modulation voltage $U^*_{abc}$ whose cycle is $kT$ and whose amplitude is segmentally varied, wherein $T$ is the cycle of the modulation wave signal $U_{abc}$. The three-phase modulation voltage $U^*_{abc}$, which is used as a three-phase modulation wave signal, is compared with a carrier wave signal to obtain an adjusted PWM pulse signal having a frequency of $f/k$, and a control signal of the generator-side converter is generated according to the adjusted PWM pulse signal, such that the switching frequency of the generator-side converter is reduced to $f/k$, where $k$ is an integer greater than 1. Here, the modulation wave signal $U_{abc}$ is compared with the carrier wave to generate the first PWM pulse signal, and $f$ is the frequency of the first PWM pulse signal.

The rotating-speed $n$ is compared with the synchronous rotating-speed $n_0$ to determine whether the rotating-speed $n$ is close to the synchronous rotating-speed $n_0$, and the determination result is output to the selection module.

It should be noted that the aforementioned control device may be a processor or a computer chip, but the present disclosure is not limited thereto.

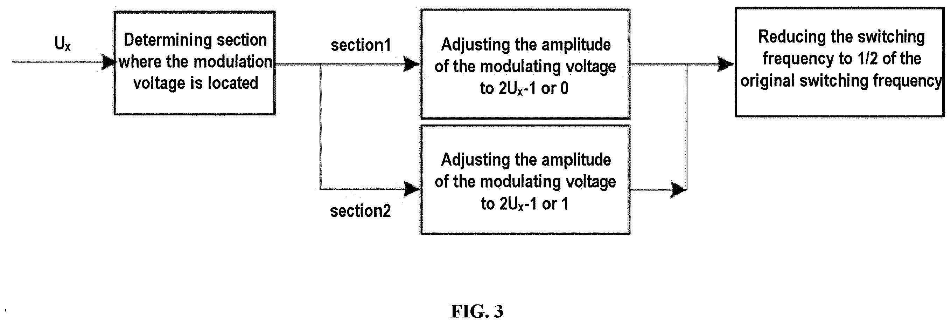

Referring to FIGs. 3-5, after adopting the technical solution of the embodiment of the present disclosure, the switching frequency of the generator-side converter in the wind power converter is reduced to 1/2 of the original switching frequency, $k=2$ here.

Take one-phase modulation voltage $U_x$ as an example, where $x$ is any of a, b and c. An operating rotating-speed of the wind power generator is obtained, and it is determined whether the difference between the operating rotating-speed and the synchronous rotating-speed is less than or equal to a predetermined threshold. If it is less than or equal to the predetermined threshold, the amplitude of the modulation voltage $U_x$ in $k$ consecutive switching cycles is adjusted; and if it is greater than the predetermined threshold, the modulation voltage $U_x$ is not adjusted.

When the difference between the operating rotating-speed $n$ and the synchronous rotating-speed $n_0$ is less than or equal to the predetermined threshold (for example, 0.01), the modulation voltage $U_x$ is adjusted. The determination of section of the modulation voltage $U_x$ is performed and the amplitude of the modulation voltage $U_x$ in a plurality of consecutive switching cycles is adjusted according to the determination result, and the switching frequency is finally reduced to 1/2 of the original switching frequency.

FIG. 3 schematically shows the steps of adjusting the modulation voltage $U_x$. As shown in FIG. 3, the modulation voltage $U_x$ output by a loop control (e.g. the torque control module 2133) of the generator-side converter is obtained at first, then the section of the modulation voltage $U_x$ is determined and the amplitude of the modulation voltage $U_x$ in two consecutive switching cycles is adjusted according to the determination result, and finally, the adjusted modulation voltage $U^*_x$ is outputted, thus reducing the switching frequency to 1/2 of the original switching frequency.

As shown in Table 1 below, when $0<U_x\leq1/2$, $U_x$ is located at section 1 and the amplitude of the modulation voltage $U_x$ is adjusted to $2U_x$ or 0 to obtain the adjusted modulation voltage $U^*_x$. When $1/2<U_x<1$, $U_x$ is located at section 2 and the amplitude of the modulation voltage $U_x$ is adjusted to $2U_x-1$ or 1 to obtain the adjusted modulation voltage $U^*_x$.

Specifically, taking $k=2$, adjusting the amplitude of the modulation voltage $U_x$ in two consecutive switching cycles includes: when $0<U_x\leq1/2$, $U_x^*=2U_x$, N=1, 2; and $U_x^*=0$, N=3, 4; and when $1/2<U_x<1$, $U_x^*=2U_x-1$, N=1, 4; and $U_x^*=1$, N=2, 3. Here N represents a half-switching cycle in the two consecutive switching cycles. For example, N=1 represents the first half-switching cycle in the two consecutive switching cycles, and so on.

Table 1, the amplitude of the modulation voltage $U_x$ in 2 consecutive switching cycles

| In | Out | Sections | | N=1 | N=2 | N=3 | N=2k=4 |
|----|-----|----------|---|-----|-----|-----|--------|
| $U_x$ | $U_X^*$ | Section 1 | $0<U_x\leq1/2$ | $U_x^*=2U_x$ | | $U_x^*=0$ | |
| | | Section 2 | $1/2<U_x<1$ | $U_x^*=2U_x-1$ | $U_x^*=1$ | | $U_x^*=2U_x-1$ |

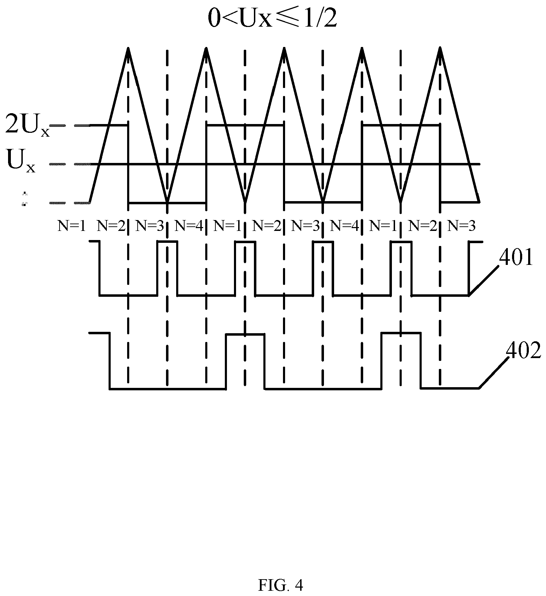

FIG. 4 schematically shows a waveform diagram of each signal when $U_x$ is located at section 1.

As shown in FIG. 4, $U_x$ is an approximate fixed value less than or equal to 0.5, and the adjusted modulation voltage $U_x^*$ is a pulse signal with a cycle of 2T and an amplitude of $2U_x$ or 0. The adjusted modulation voltage $U_x^*$, which is used as a modulation wave, is compared with a triangular wave to obtain a PWM pulse signal, which is marked as a second PWM pulse signal 402 in FIG. 4. The unadjusted modulation voltage $U_x$ is compared with the triangular wave to obtain a PWM pulse signal, which is marked as a first PWM pulse signal 401 in FIG. 4. The frequency of the second PWM pulse signal is 1/2 of that of the first PWM pulse signal.

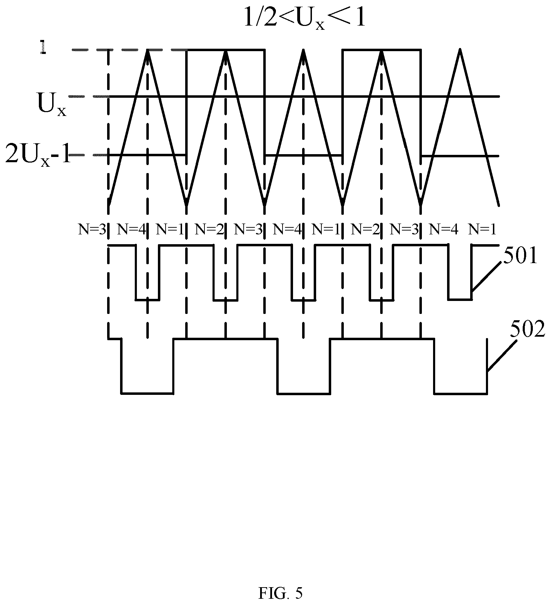

FIG. 5 schematically shows a waveform diagram of each signal when $U_x$ is located at section 2.

As shown in FIG. 5, $U_x$ is an approximate fixed value greater than 0.5, and the adjusted modulation voltage $U_x^*$ is a pulse signal with a cycle of 2T and the amplitude of $2U_x-1$ or 1. The adjusted modulation voltage $U_x^*$ is compared with a triangular wave to obtain a PWM pulse signal, which is marked as a second PWM pulse signal 502 in FIG. 5. The unadjusted modulation voltage $U_x$ is compared with the triangular wave to obtain a PWM pulse signal, which is marked as a first PWM pulse signal 501 in FIG. 5. The frequency of the second PWM pulse signal is 1/2 of that of the first PWM pulse signal.

Since the rotating-speed of the rotor of the wind power generator fluctuates around the synchronous rotating-speed, the modulation voltage $U_x$ at the AC side port of the generator-side converter may fluctuate frequently around 0.5, thus the above-described two methods of adjustment of the modulation wave will be frequently switched, which may cause loss of pulses during switching, thus leading to distortion of current. A common mode component is injected into the modulation voltage $U_x$ output by the loop control (e.g. torque control), such that most of the modulation voltage $U_x$ as a whole rises above 0.5 or reduces below 0.5, avoiding frequent switching of the above-described two methods of adjustment of the modulation wave.

In order to solve this problem, it is necessary to inject a common mode component in the above-mentioned solution, such that most of the modulation voltage $U_x$ as a whole rises above 0.5 or reduces below 0.5. The determination of section of the modulation voltage $U_x$ is performed, then the amplitude of the modulation voltage $U_x$ in a plurality of consecutive switching cycles is adjusted according to the determination result, and finally the switching frequency is reduced to 1/2 of the original switching frequency.

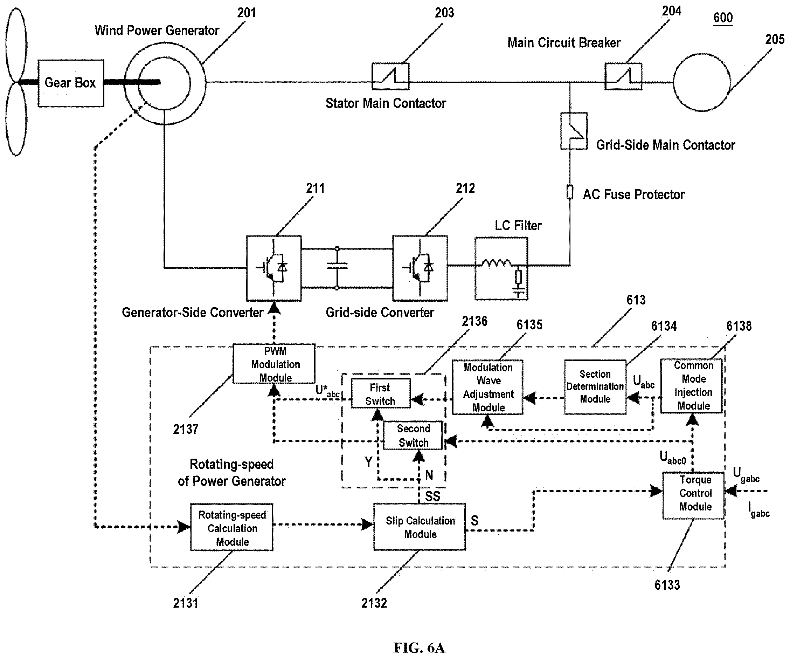

FIG. 6A schematically shows another wind power generation system. As shown in FIG. 6A, a wind power generation system 600 differs from the wind power generation system 200 mainly in that a control device 613 further includes a common mode signal injection module 6138, which is coupled between a torque control module 6133 and a section determination module 6134. The common mode signal injection module 6138 together with the torque control module 6133 can be referred to as a modulation wave acquisition module. The torque control module 6133 outputs an initial modulation wave signal $U_{abc0}$, and the common mode signal injection module 6138 is configured to receive the initial modulation wave signal and inject a common mode signal $U_{cm}$ therein, that is, superimpose the common mode signal $U_{cm}$ in the initial modulation wave signal $U_{abc0}$ to obtain a modulation Voltage $U_{abc}$. A section determination module 234 receives the modulation voltage $U_{abc}$ and determines the section where $U_{abc}$ is located. Correspondingly, a modulation wave adjustment module 6135 is coupled to the common mode injection module and the section determination module, and configured to receive the modulation voltage $U_{abc}$ output by the common mode injection module and adjust the modulation voltage $U_{abc}$ according to the section output by the section determination module 6134 to obtain the adjusted three-phase modulation voltage $U^*_{abc}$

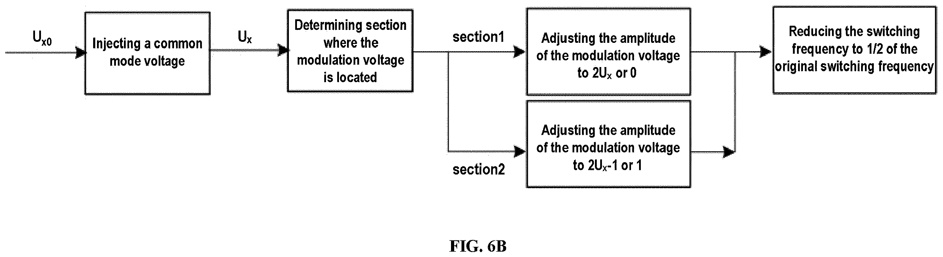

FIG. 6B schematically shows the steps of adjusting the modulation voltage $U_x$. As shown in FIG. 6B, an initial modulation voltage $U_{x0}$ output from a loop control of the generator-side converter is obtained at first, and the modulation voltage $U_{x0}$ is adjusted when the difference between an operating rotating-speed n and a synchronous rotating-speed $n_0$ is less than or equal to a predetermined threshold (e.g. 0.01). Since the rotating-speed of the rotor of the wind power generator fluctuates around the synchronous rotating-speed, the modulation voltage $U_{x0}$ at the AC side port of the generator-side converter may frequently fluctuate around 0.5. To solve this problem, a common mode voltage is injected into the initial modulation voltage $U_{x0}$, such that most of the modulation voltage $U_{x0}$ rises above 0.5 or reduces below 0.5. The common mode voltage $U_{cm}$ is denoted as follows:

$$Ucm = \max\left(\left|U_{x0}\right|\right)$$

Where $U_{x0}$ denotes the modulation voltage $U_x$ output from the loop control.

The modulation voltage $U_x$ of the generator-side converter is obtained after the injection of the common mode voltage, then the determination of section of the modulation voltage $U_x$ is performed, the amplitude of the modulation voltage $U_x$ in two consecutive switching cycles is adjusted according to the determination result, and finally the adjusted modulation voltage $U^*_x$ is output, thus reducing the switching frequency to 1/2 of the original switching frequency.

As shown in Table 2 below, when $0<U_x\leq1/2$, $U_x$ is located at section 1 and the amplitude of the modulation voltage $U_x$ is adjusted to $2U_x$ or 0 to obtain the adjusted modulation voltage $U^*_x$; and when $1/2<U_x<1$, $U_x$ is located at section 2 and the amplitude of the modulation voltage $U_x$ is adjusted to $2U_x-1$ or 1 to obtain the adjusted modulation voltage $U^*_x$.

Table 2, the amplitude of the modulation voltage $U_x$ during 2 consecutive switching cycles

| In | Out | Sections | | N=1 | N=2 | N=3 | N=4 |
|---|---|---|---|---|---|---|---|
| $U_{x0}$ | $U_x^*$ | Section 1 | $0<U_x\leq1/2$ | $U_x^*=2U_x$ | | $U_x^*=0$ | |
| | | Section 2 | $1/2<U_x<1$ | $U_X^*=2U_X-1$ | $U_x^*=1$ | | $U_x^*=2U_x-1$ |

A waveform diagram of each signal when $U_x$ is located at section 1 and a waveform diagram of each signal when $U_x$ is located at section 2 are similar to those in FIGs. 4 and 5 respectively, and will not be elaborated here.

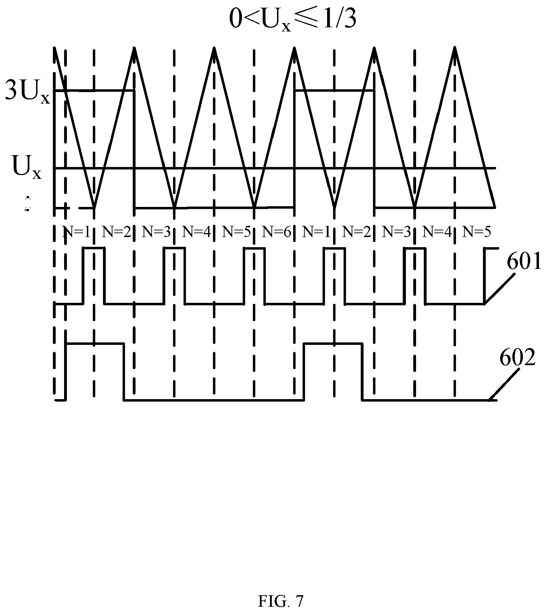

Referring to FIGs. 7-9, after adopting the technical solution of the embodiment of the present disclosure, the switching frequency of the wind power converter is reduced to 1/3 of the original switching frequency, that is, k=3 here.

When the difference between the operating rotating-speed n and the synchronous rotating-speed $n_0$ is less than or equal to a predetermined threshold (e.g. 0.01), the modulation voltage $U_x$ is adjusted, then the determination of section of the modulation voltage $U_x$ is performed, and the amplitude of the modulation voltage $U_x$ in three consecutive switching cycles is adjusted according to the determination result, and finally the adjusted modulation voltage $U^*_x$ is output, thus reducing the switching frequency to 1/3 of the original switching frequency.

As shown in Table 3 below, when $0<U_x\leq1/3$, $U_x$ is located at section 1 and the amplitude of the modulation voltage $U_x$ is adjusted to $3U_x$ or 0 to obtain the adjusted modulation voltage $U^*_x$; when $1/3<U_x\leq2/3$, $U_x$ is located at section 2 and the amplitude of the modulation voltage $U_x$ is adjusted to $3U_x-1$, 0 or 1 to obtain the adjusted modulation voltage $U^*_x$; and when $2/3<U_x<1$, $U_x$ is located at section 3 and the amplitude of the modulation voltage $U_x$ is adjusted to $3U_x-2$ or 1 to obtain the adjusted modulation voltage $U^*_x$.

Specifically, taking k=3, adjusting the amplitude of the modulation voltage $U_x$ in three consecutive switching cycles includes: when $0<U_x\leq1/3$, $U_x^*=3U_x$, N=1, 2; and $U_x^*=0$, N=3, 4, 5, 6; when $1/3<U_x\leq2/3$, $U_x^*=1$, N=2, 3; $U_x^*=3U_x-1$, N=1, 4; and $U_x^*=0$, N=5, 6; and when $2/3<U_x<1$, $U_x^*=3U_x-2$, N=1, 6; and $U_x^*=1$, N=2, 3, 4, 5, where N represents a half-switching cycle in the three consecutive switching cycles. For example, N=1 represents the first half-switching cycle in the three consecutive switching cycles, and so on.

Table 3, the amplitude of the modulation voltage $U_x$ in 3 consecutive switching cycles

| In | Out | Sections | | N=1 | N=2 | N=3 | N=4 | N=5 | N=6 |
|---|---|---|---|---|---|---|---|---|---|
| $U_x$ | $U_x^*$ | Section 1 | $0<U_x\leq1/3$ | $U_x^*=3U_x$ | | $U_x^*=0$ | | | |
| | | Section 2 | $1/3<U_x\leq2/3$ | $U_x^*=3U_x-1$ | $U_x^*=1$ | | $U_x^*=3U_x-1$ | $U_x^*=0$ | |
| | | Section 3 | $2/3<U_x<1$ | $U_x^*=3U_x-2$ | $U_x^*=1$ | | | | $U_x^*=3U_x-2$ |

FIG. 7 schematically shows a waveform diagram of each signal when $U_x$ is located at section 1.

As shown in FIG. 7, $U_x$ is an approximate fixed value greater than 0 and equal to or less than 1/3, and the adjusted modulation voltage $U_x^*$ is a pulse signal with a cycle of 3T and an amplitude of $3U_x$ or 0. The adjusted modulation voltage $U_x^*$ is compared with a triangular wave to obtain a PWM pulse signal, which is marked as a second PWM pulse signal 602 in FIG. 7. The unadjusted modulation voltage $U_x$ is compared with the triangular wave to obtain a PWM pulse signal, which is marked as a first PWM pulse signal 601 in FIG. 7. The frequency of the second PWM pulse signal is 1/3 of that of the first PWM pulse signal.

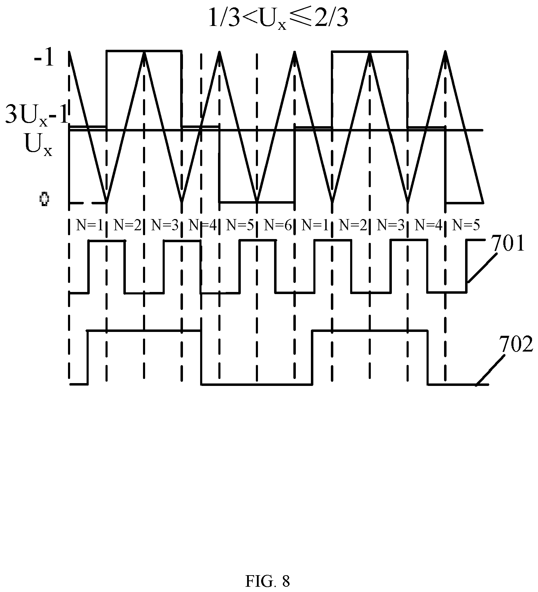

FIG. 8 schematically shows a waveform diagram of each signal when $U_x$ is located at section 2. As shown in FIG. 8, $U_x$ is an approximate fixed value greater than 1/3 or equal to or less than 2/3, and the adjusted modulation voltage $U_x^*$ is a signal with a cycle of 3T and an amplitude segmentally varied, which are $3U_x-1$, 0 or 1. As a modulation wave, the adjusted modulation voltage $U_x^*$ is compared with a triangular wave to obtain a PWM pulse signal, which is marked as a second PWM pulse signal 702 in FIG. 8. The unadjusted modulation voltage $U_x$ is compared with the triangular wave to obtain a PWM pulse signal, which is marked as a first PWM pulse signal 701 in FIG. 8. The frequency of the second PWM pulse signal is 1/3 of that of the first PWM pulse signal.

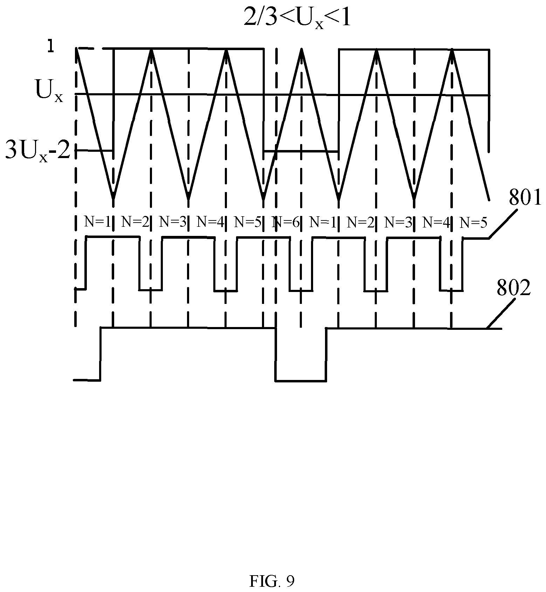

FIG. 9 schematically shows a waveform diagram of each signal when $U_x$ is located at section 3. As shown in FIG. 9, $U_x$ is an approximate fixed value greater than 2/3 or less than 1, and the adjusted modulation voltage $U_x^*$ is a pulse signal with a cycle of 3T and an amplitude of $3U_x-2$ or 1. The adjusted modulation voltage $U_x^*$ is compared with a triangular wave to obtain a PWM pulse signal, which is marked as a second PWM pulse signal 802 in FIG. 8. The unadjusted modulation voltage $U_x$ is compared with the triangular wave to obtain a PWM pulse signal, which is marked as a first PWM pulse signal 801 in FIG. 8. The frequency of the second PWM pulse signal is 1/3 of that of the first PWM pulse signal.

Since the rotating-speed of the rotor of the wind power generator fluctuates around the synchronous rotating-speed, the modulation voltage $U_x$ at the AC side port of the generator-side converter fluctuates frequently around 1/3 or 2/3. In some embodiments, a common mode component can be injected into the above-mentioned solution, such that most of the modulation voltage $U_x$ rises or drops as a whole.

When the difference between the operating rotating-speed n and the synchronous rotating-speed $n_0$ is less than or equal to the predetermined threshold (e.g. 0.01), the determination of section of the modulation voltage $U_x$ is performed, and the amplitude of the modulation voltage $U_x$ in a plurality of consecutive switching cycles is adjusted according to the determination result, and finally the switching frequency is reduced to 1/k of the original switching frequency.

Specifically, as shown in Table 4 below, adjusting the amplitude of the modulation voltage $U_x$ in k consecutive switching cycles includes:

when $0<U_x\leq1/k$, $U_x^*=kU_x$, N=1, 2; and $U_x^*=0$, N=3, ..., 2k;
when $(m-1)/k<U_x\leq m/k$, $U_x^*=kU_x-m+1$, N=1; $U_x^*=1$, N=2, ..., 2m-1;
$U_x^*=kU_x-m+1$, N=2m; and $U_x^*=0$, N=2m+1, ..., 2k; and
when $(k-1)/k<U_x<1$, $U_x^*=kU_x-k+1$, N=1; and $U_x^*=1$, N=2, ..., 2k-1,
where $U_x$ is the modulation voltage, $U_x^*$ is the adjusted modulation voltage, m is an integer greater than 1 and less than k, and N is a natural number, a value of which is taken from 2k consecutive half-switching cycles.

Table 4, the amplitude of the modulation voltage $U_x$ in k consecutive switching cycles

| Sections | | N=1 | N=2 | ...... | N=2k |
|---|---|---|---|---|---|
| Section 1 | $0<U_x\leq1/k$ | $U_x^*=kU_x$ | | $U_x^*=0$ | |
| Sections | | N=1 | N=2...2m-1 | N=2m | N=2m+1...2k |
| Sectionm | $(m-1)/k<U_x\leq m/k$ | $U_x^*=kU_x-m+1$ | $U_x^*=1$ | $U_x^*=kU_x-m+1$ | $U_x^*=0$ |
| Sections | | N=1 | N=2...2k-1 | | N=2k |
| Sectionk | $(k-1)/k<U_x\leq1$ | $U_x^*=kU_x-k+1$ | $U_x^*=1$ | | $U_x^*=kU_x-k+1$ |

main circuit of the generator-side converter is a two-level circuit and the value range of the normalized modulation voltage is: $0<U_x<1$.

After obtaining a x-phase PWM pulse signal (such as 402, 502, 602), where x is any of a, b and c, two sets of control signals are obtained by inverting the PWM pulse signal and adding the dead zone control, which are control signals of upper and lower bridge arm switches of a bridge arm corresponding to the x-phase, respectively.

The main circuit of the generator-side converter can be a multi-level circuit as well, for example a three-level circuit topology. Compared with a two-level bridge circuit, the multi-level circuit has the advantages of low switch voltage stress and good output voltage quality. Taking a three-level circuit as an example, when the rotating-speed of the rotor of the wind power generator is close to the synchronous rotating-speed, a modulation voltage of the three-level circuit is approximate to a DC quantity, thus the adjustment method of the modulation voltage of the present disclosure can be used to reduce the switching frequency. After normalization, the value range of the modulation voltage of the three-level circuit is: $-1 < U_x < 1$. The method for adjusting the modulation voltage of the three-level circuit will described below.

At present, with the development of digital processing technology, PWM modules integrated in a Digital Signal Processor (DSP) or a Microcontroller Module (MCU) are usually used to generate pulse signals, and technicians only need to configure the corresponding register while programming. There are mainly two ways of realizing the PWM process, which are modulation based on carrier wave phase opposition disposition and modulation based on carrier wave phase disposition, respectively. The PWM modulation based on the carrier wave phase disposition is adopted here.

As shown in Table 5 below, when $0 < U_x \leq 1/2$, $U_x$ is located at section 1 and the amplitude of the modulation voltage $U_x$ is adjusted to $2U_x$ or 0 to obtain the adjusted modulation voltage $U_x^*$; and when $1/2 < U_x < 1$, $U_x$ is located at section 2 and the amplitude of the modulation voltage $U_x$ is adjusted to $2U_x-1$ or 1 to obtain the adjusted modulation voltage $U_x^*$. When $-1/2 \leq U_x < 0$, $U_x$ is located at section 3 and the amplitude of the modulation voltage $U_x$ is adjusted to $2U_x$ or 0 to obtain the adjusted modulation voltage $U_x^*$; and when $-1 < U_x < -1/2$, $U_x$ is located at section 4 and the amplitude of the modulation voltage $U_x$ is adjusted to $2U_x-1$ or 1 to obtain the adjusted modulation voltage $U_x^*$.

Specifically, taking k=2, adjusting the amplitude of the modulation voltage $U_x$ in two consecutive switching cycles includes: when $0 < U_x \leq 1/2$, $U_x^*=2U_x$, N=1, 2; and $U_x^*=0$, N=3, 4; and when $1/2 < U_x < 1$, $U_x^*=1$, N=1, 4; and $U_x^*=2U_x-1$, N=2, 3. When $-1/2 \leq U_x < 0$, $U_x^*=0$, N=1, 4; and $U_x^*=2U_x$, N=2, 3; and when $-1 < U_x < -1/2$, $U_x^*=2U_x+1$, N=1, 2; and $U_x^*=1$, N=3, 4. Here N represents a half-switching cycle in the two consecutive switching cycles, for example, N=1 represents the first half-switching cycle in the two consecutive switching cycles, and so on.

Table 5, the amplitude of the modulation voltage $U_x$ in 2 consecutive switching cycles.

| In | Out | Sections | | N=1 | N=2 | N=3 | N=4 |
|---|---|---|---|---|---|---|---|
| $U_x$ | $U_x^*$ | Section 1 | $0 < U_x \leq 1/2$ | $U_x^*=2U_x$ | | $U_x^*=0$ | |
| | | Section 2 | $1/2 < U_x < 1$ | $U_x^*=1$ | $U_x^*=2U_x-1$ | | $U_x^*=1$ |
| | | Section 3 | $-1/2 \leq U_x < 0$ | $U_x^*=0$ | $U_x^*=2U_x$ | | $U_x^*=0$ |
| | | Section 4 | $-1 < U_x < -1/2$ | $U_x^*=2U_x+1$ | | $U_x^*=-1$ | |

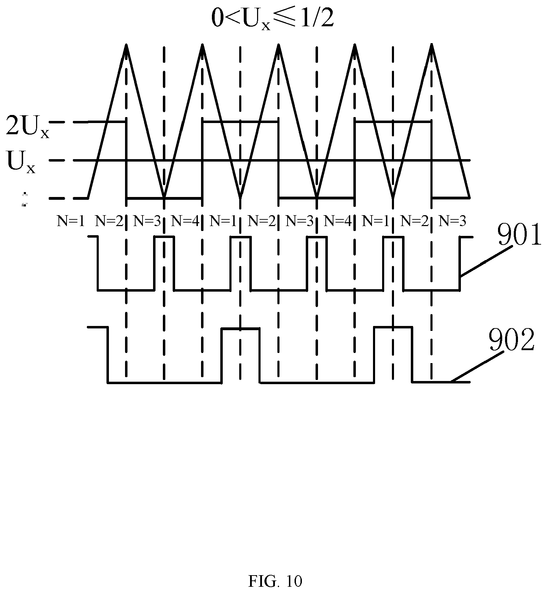

FIG. 10 schematically shows a waveform diagram of each signal when $U_x$ is located at section 1 in this embodiment. As shown in FIG. 10, $U_x$ is an approximate fixed value greater than 0 and equal to or less than 0.5, and the adjusted modulation voltage $U_x^*$ is a pulse signal with a cycle of 2T and an amplitude of $2U_x$ or 0. The adjusted modulation voltage $U_x^*$, which is used as a modulation wave, is compared with a triangular carrier wave to obtain a PWM pulse signal, which is marked as a second PWM pulse signal 902 in FIG. 10. The unadjusted modulation voltage $U_x$ is compared with the triangular wave to obtain a PWM pulse signal, which is marked as a first PWM pulse signal 901 in FIG. 10. The frequency of the second PWM pulse signal is 1/2 of that of the first PWM pulse signal.

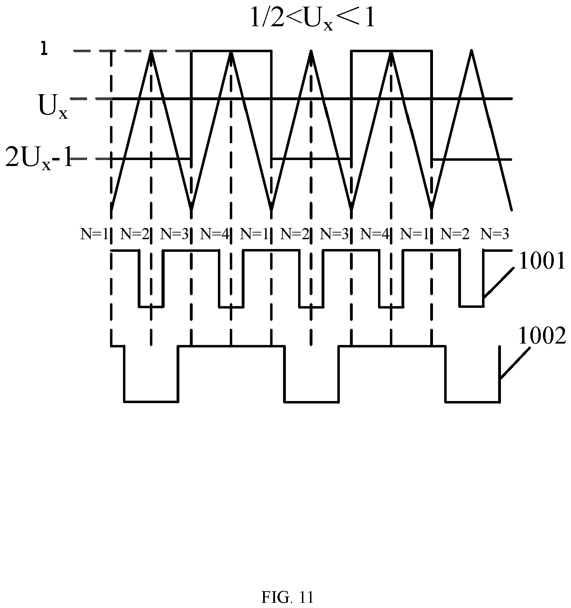

FIG. 11 schematically shows a waveform diagram of each signal when $U_x$ is located at section 2.

As shown in FIG. 11, $U_x$ is an approximate fixed value greater than 0.5 and less than 1, and the adjusted modulation voltage $U_x^*$ is a pulse signal with a cycle of 2T and an amplitude of $2U_x-1$ or 1. The adjusted modulation voltage $U_x^*$ is compared with a triangular wave to obtain a PWM pulse signal, which is marked as a second PWM pulse signal 1002 in FIG. 11. The unadjusted modulation voltage $U_x$ is compared with the triangular wave to obtain a PWM pulse signal, which is marked as a first PWM pulse signal 1001 in FIG. 11. The frequency of the second PWM pulse signal is 1/2 of that of the first PWM pulse signal.

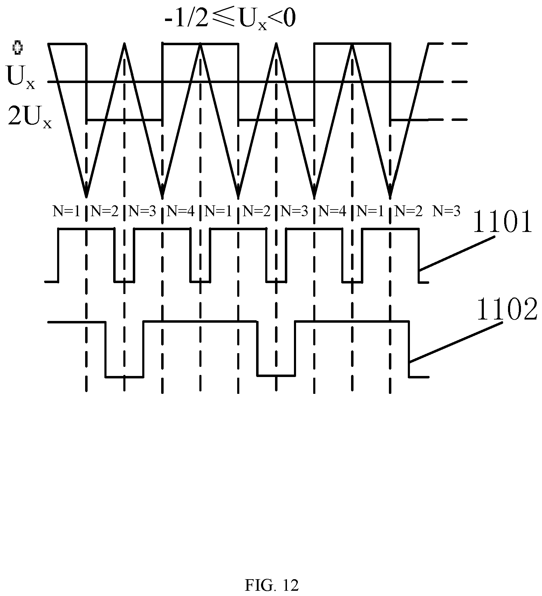

FIG. 12 schematically shows a waveform diagram of each signal when $U_x$ is located at section 3.

As shown in FIG. 12, $U_x$ is an approximate fixed value equal to or greater than -0.5 and less than 0, and the adjusted modulation voltage $U_x^*$ is a pulse signal with a cycle of 2T and an amplitude of $2U_x$ or 0. The adjusted modulation voltage $U_x^*$ is compared with a triangular wave to obtain a PWM pulse signal, which is marked as a second PWM pulse signal 1102 in FIG. 12. The unadjusted modulation voltage $U_x$ is compared with the triangular wave to obtain a PWM pulse signal, which is marked as a first PWM pulse signal 1101 in FIG. 12. The frequency of the second PWM pulse signal is 1/2 of that of the first PWM pulse signal.

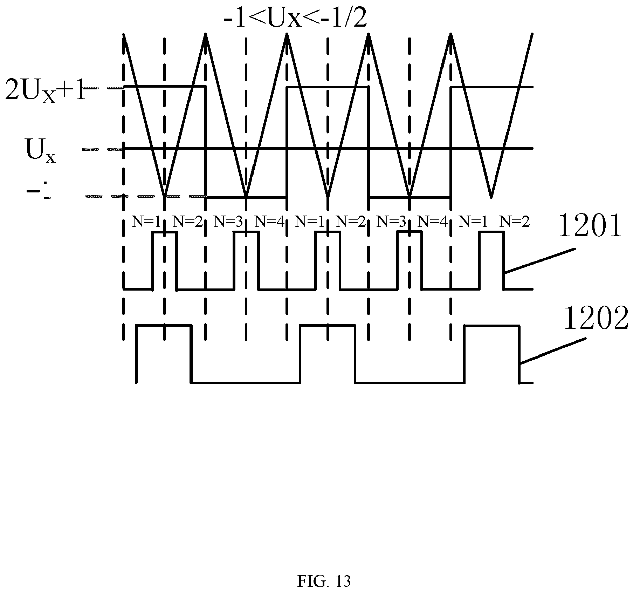

FIG. 13 schematically shows a waveform diagram of each signal when $U_x$ is located at section 4.

As shown in FIG. 13, $U_x$ is an approximate fixed value greater than -1 and less than 0.5, and the adjusted modulation voltage $U_x^*$ is a pulse signal with a cycle of 2T and an amplitude of $2U_x+1$ or 1. The adjusted modulation voltage $U_x^*$ is compared with a triangular wave to obtain a PWM pulse signal, which is marked as a second PWM pulse signal 1202 in FIG. 13. The unadjusted modulation voltage $U_x$ is compared with the triangular wave to obtain a PWM pulse signal, which is marked as a first PWM pulse signal 1201 in FIG. 13. The frequency of the second PWM pulse signal is 1/2 of that of the first PWM pulse signal.

The PWM modulation based on the carrier wave phase opposition disposition is adopted here.

As shown in Table 6 below, when $0<U_x\leq1/2$, $U_x$ is located at section 1 and the amplitude of the modulation voltage $U_x$ is adjusted to $2U_x$ or 0 to obtain the adjusted modulation voltage $U^*_x$; and when $1/2<U_x<1$, $U_x$ is located at section 2 and the amplitude of the modulation voltage $U_x$ is adjusted to $2U_x-1$ or 1 to obtain the adjusted modulation voltage $U^*_x$. When $-1/2\leq U_x<0$, $U_x$ is located at section 3 and the amplitude of the modulation voltage $U_x$ is adjusted to $2U_x$ or 0 to obtain the adjusted modulation voltage $U^*_x$; and when $-1<U_x<-1/2$, $U_x$ is located at section 4 and the amplitude of the modulation voltage $U_x$ is adjusted to $-2U_x-1$ or -1 to obtain the adjusted modulation voltage $U^*_x$.

Specifically, taking k=2, adjusting the amplitude of the modulation voltage $U_x$ in two consecutive switching cycles includes: when $0<U_x\leq1/2$, $U_x^*=2U_x$, N=1, 2; and $U_x^*=0$, N=3, 4; and when $1/2<U_x<1$, $U_x^*=2U_x-1$, N=4, 1; $U_x^*=1$, and N=2, 3. When $-1/2\leq U_x<0$, $U_x^*=0$, N=1, 2; and $U_x^*=2U_x$, N=3, 4; and when $-1<U_x<-1/2$, $U_x^*=-1$, N=4, 1; and $U_x^*=-2U_x-1$, N=2, 3. Here N represents a half-switching cycle in the two consecutive switching cycles, for example, N=1 represents the first half-switching cycle in the two consecutive switching cycles, and so on.

Table 6, the amplitude of the modulation voltage $U_x$ in 2 consecutive switching cycles.

| In | Out | Sections | | N=1 | N=2 | N=3 | N=4 |
|---|---|---|---|---|---|---|---|
| $U_x$ | $U_x^*$ | Section 1 | $0<U_x\leq1/2$ | $U_x^*=2U_x$ | | $U_x^*=0$ | |
| | | Section 2 | $1/2<U_x<1$ | $U_x^*=2U_x-1$ | $U_x^*=1$ | | $U_x^*=2U_x-1$ |
| | | Section 3 | $-1<U_x\leq-1/2$ | $U_x^*=0$ | | $U_x^*=2U_x$ | |
| | | Section 4 | $-1/2\leq U_x<0$ | $U_x^*=-1$ | $U_x^*=-2U_x-1$ | | $U_x^*=-1$ |

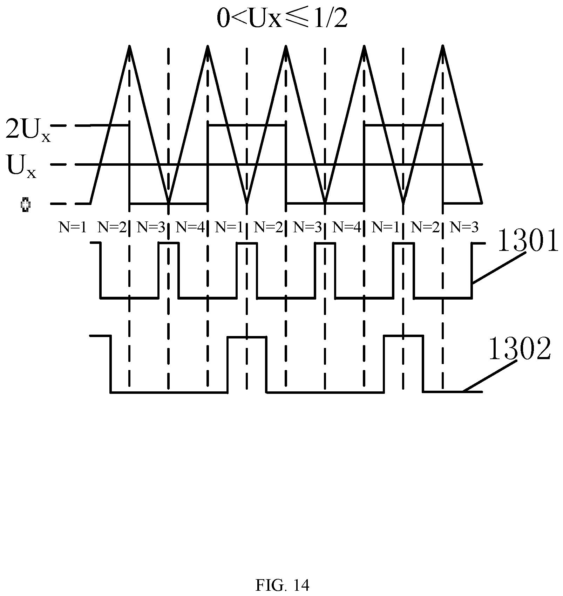

FIG. 14 schematically shows a waveform diagram of each signal when $U_x$ is located at section 1.

As shown in FIG. 14, $U_x$ is an approximate fixed value greater than 0 and equal to or less than 0.5, and the adjusted modulation voltage $U_x^*$ is a pulse signal with a cycle of 2T and an amplitude of $2U_x$ or 0. The adjusted modulation voltage $U_x^*$, which is used as a modulation wave, is compared with a triangular wave to obtain a PWM pulse signal, which is marked as a second PWM pulse signal 1302 in FIG. 14. The unadjusted modulation voltage $U_x$ is compared with the triangular wave to obtain a PWM pulse signal, which is marked as a first PWM pulse signal 1301 in FIG. 14. The frequency of the second PWM pulse signal is 1/2 of that of the first PWM pulse signal.

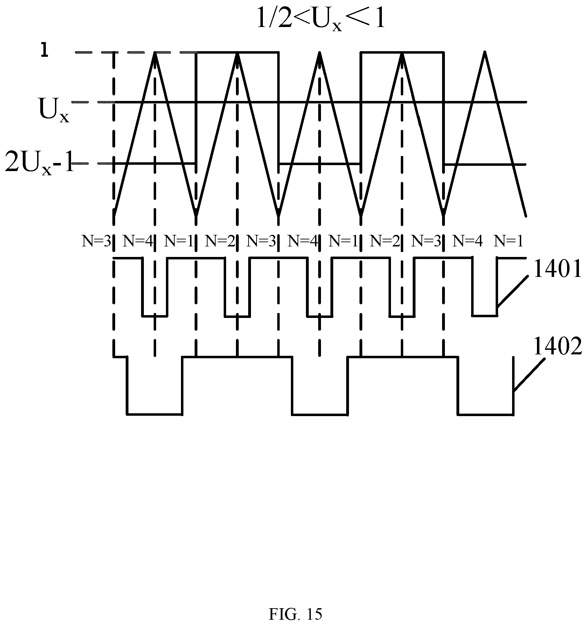

FIG. 15 schematically shows a waveform diagram of each signal when $U_x$ is located at section 2.

As shown in FIG. 15, $U_x$ is an approximate fixed value greater than 0.5 and less than 1, and the adjusted modulation voltage $U_x^*$ is a pulse signal with a cycle of 2T and an amplitude of $2U_x-1$ or 1. The adjusted modulation voltage $U_x^*$ is compared with a triangular wave to obtain a PWM pulse signal, which is marked as a second PWM pulse signal 1402 in FIG. 15. The unadjusted modulation voltage $U_x$ is compared with the triangular wave to obtain a PWM pulse signal, which is marked as a first PWM pulse signal 1401 in FIG. 15. The frequency of the second PWM pulse signal is 1/2 of that of the first PWM pulse signal.

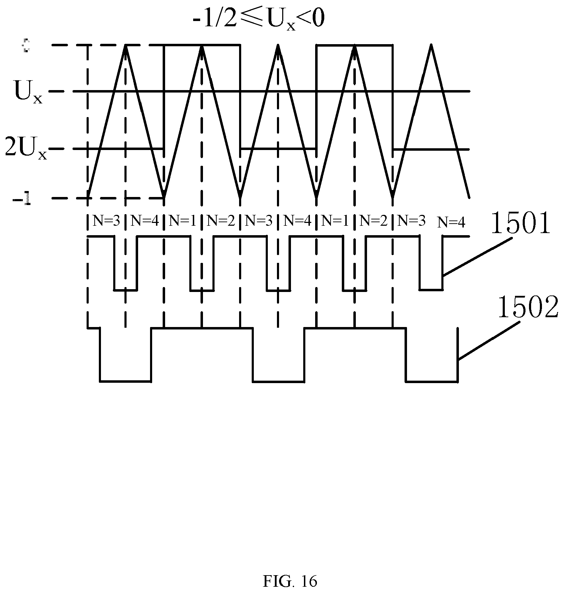

FIG. 16 schematically shows a waveform diagram of each signal when $U_x$ is located at section 4.

As shown in FIG. 16, $U_x$ is a fixed value equal to or greater than -0.5 and less than 0, and the adjusted modulation voltage $U_x^*$ is a pulse signal with a cycle of 2T and an amplitude of $2U_x$ or 0. The adjusted modulation voltage $U_x^*$ is compared with a triangular wave to obtain a PWM pulse signal, which is marked as a second PWM pulse signal 1502 in FIG. 16. The unadjusted modulation voltage $U_x$ is compared with the triangular wave to obtain a PWM pulse signal, which is marked as a first PWM pulse signal 1501 in FIG. 16. The frequency of the second PWM pulse signal is 1/2 of that of the first PWM pulse signal.

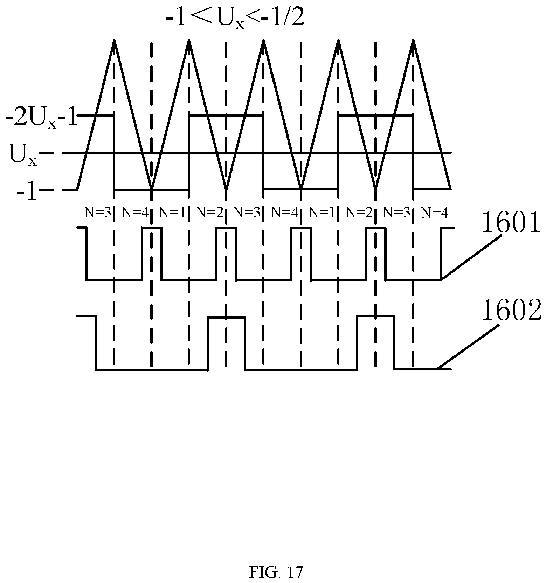

FIG. 17 schematically shows a waveform diagram of each signal when $U_x$ is located at section 3.

As shown in FIG. 17, $U_x$ is an approximate fixed value greater than -1 and less than -0.5, and the adjusted modulation voltage $U_x^*$ is a pulse signal with a cycle of 2T and an amplitude of $-2U_x-1$ or -1. The adjusted modulation voltage $U_x^*$ is compared with a triangular wave to obtain a PWM pulse signal, which is marked as a second PWM pulse signal 1502 in FIG. 17. The unadjusted modulation voltage $U_x$ is compared with the triangular wave to obtain a PWM pulse signal, which is marked as a first PWM pulse signal 1501 in FIG. 17. The frequency of the second PWM pulse signal is 1/2 of that of the first PWM pulse signal.

Since the rotating-speed of the rotor of the wind power generator fluctuates around the synchronous rotating-speed, the modulation voltage at the AC side port of a three-level generator-side converter may fluctuate frequently around +0.5 or -0.5, thus leading to frequently switching of the methods of adjustment of the modulation wave. A common mode component can be superimposed on the modulation voltage, such that most of the modulation voltage as a whole rises above +0.5 or reduces below -0.5. Please refer above for details, which will not be elaborated here.

In the method of controlling the switching frequency of the wind power converter according to the embodiment of the present disclosure, it can adjust the amplitude of the modulation voltage in k consecutive switching cycles, generate a PWM pulse signal according to the adjusted modulation voltage, and reduce the switching frequency of the wind power converter by periodic changes in duty cycles. The technical solution of the embodiments of the present disclosure realizes the purpose of reducing the switching frequency without changing clock configuration of a control chip, peripheral initialization configuration of a PWM module, discretization parameters of a control loop, and discretization parameters of a filter, such that it is easy to be implemented, and needs no switching of parameters and has relatively high system reliability.

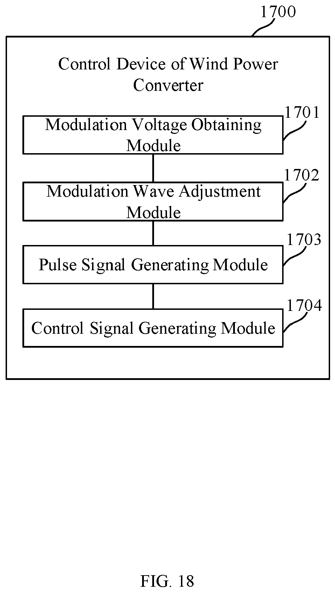

As shown in FIG. 18, a control device of a wind power converter is provided, including a modulation voltage obtaining module 1701, a modulation wave adjustment module 1702, a pulse signal generating module 1703 and a control signal generating module 1704.

The modulation voltage obtaining module 1701 is configured to obtain a modulation voltage of a generator-side converter.

The modulation wave adjustment module 1702 is configured to adjust an amplitude of the modulation voltage in k consecutive switching cycles.

The pulse signal generating module 1703 is configured to generate a PWM pulse signal according to the adjusted modulation voltage, wherein the frequency of the generated PWM pulse signal is 1/k of that of a first PWM pulse signal. The frequency of the first PWM pulse signal represents a frequency of a PWM pulse signal generated when the modulation voltage is not adjusted, and k is an integer equal to or greater than 2.

The control signal generating module 1704 is configured to generate a control signal of the generator-side converter according to the PWM pulse signal.

In the technical solution of the present disclosure, by adjustment of the amplitude of the modulation voltage in the k consecutive switching cycles, the frequency of the generated PWM pulse signal is 1/k of the original frequency, namely, the switching frequency is reduced to 1/k of the original switching frequency, thus reducing the switching frequency of the wind power converter.

The control device of the wind power converter provided by the embodiment of the present disclosure further includes a rotating-speed obtaining module and a slip calculation module.

The rotating-speed obtaining module is configured to obtain an operating rotating-speed of a wind power generator.

The slip calculation module is configured to determine whether the difference between the operating rotating-speed and a synchronous rotating-speed is less than or equal to a predetermined threshold. It may send a start/output command to the modulation wave adjustment module if the difference is less than or equal to the predetermined threshold, and not send on the start/output command to the modulation wave adjustment module if the difference is greater than the predetermined threshold. The start/output command corresponds to a start command or an output command. The start command refers to enabling the modulation wave adjustment module to adjust the modulation wave and output the adjusted modulation wave. The output command refers to outputting the modulation voltage adjusted by the modulation wave adjustment module, at this time, other functions of the modulation wave adjustment module need not to be awakened by a command.

The modulation wave adjustment module 1702 is configured to adjust the amplitude of the modulation voltage in k consecutive switching cycles after receiving the start/output command.

The modulation voltage obtaining module 1701 includes a voltage obtaining sub-module and a common-mode voltage injection sub-module.

The voltage obtaining sub-module is configured to obtain a modulation voltage output by a loop control of the generator-side converter.

The common-mode voltage injection sub-module is configured to inject a common-mode voltage into the modulation voltage output by the loop control to obtain the modulation voltage of the generator-side converter.

The modulation wave adjustment module 1702 includes a section determination sub-module and an adjustment sub-module.

The section determination sub-module is configured to receive the modulation voltage output by the modulation voltage obtaining module 1701 to determine the section where the modulation voltage is located.

The adjustment sub-module is configured to adjust the modulation voltage according to the section where the modulation voltage is located.

The control device of the wind power converter of the embodiment of the present disclosure adjusts the amplitude of the modulation voltage in k consecutive switching cycles, generates a PWM pulse signal according to the adjusted modulation voltage, and reduces the switching frequency of the wind power converter by periodic changes in duty cycles.

The present disclosure further provides a wind power generation system, including a wind power generator, a wind power converter and a control device of the wind power converter in the above-described technical solution.

The wind power generation system includes the control device in the above-mentioned technical solution, therefore it has the same technical effect as that of the control device, realizes the periodic changes in duty cycles, and reduces the switching frequency of the wind power converter.

It should be noted that description is made by taking the wind power generation system as an example in the present application, but the method and device of reducing the switching frequency of the present application are applicable to other power systems or power equipment, such as full-power wind power generation systems, as well. Therefore, the method of reducing the switching frequency proposed in the present application can be adopted as long as a voltage entering a three-phase port of a power system is approximate to a DC quantity.

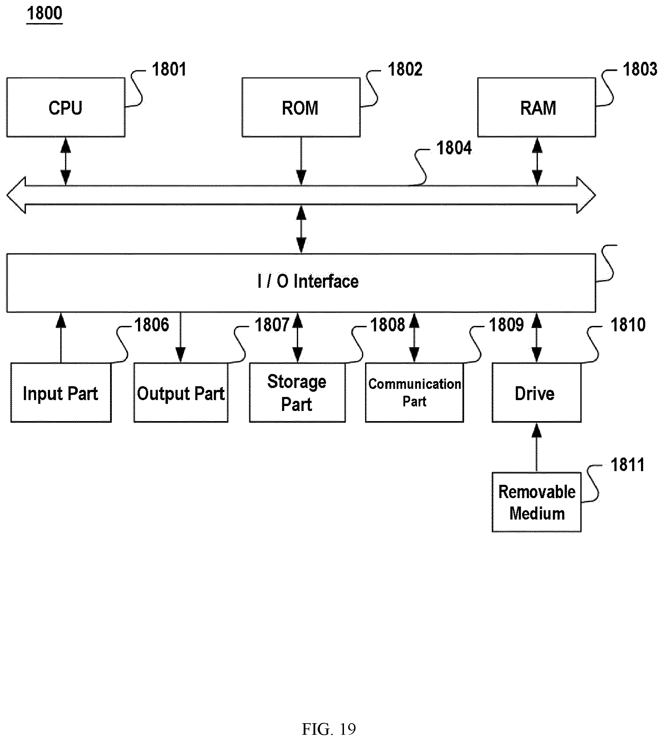

FIG. 19 shows a structural schematic diagram of a computer system 1800 suitable for implementing an electronic device of the present disclosure. The computer system 1800 of the electronic device shown in FIG. 19 is only an example, and should not impose any limitations on the function and scope of use of the embodiments of the present disclosure.

As shown in FIG. 19, the computer system 1800 includes a central processing unit (CPU) 1801, which can perform various appropriate actions and processing based on programs stored in a read only memory (ROM) 1802 or programs loaded to a random access memory (RAM) 1803 from a storage part 1808. Various programs and data required for system operation are also stored in RAM 1803. CPU 1801, ROM 1802, and RAM 1803 are connected to one another through a bus 1804. An input/output (I/O) interface 1805 is connected to the bus 1804 as well.

The I/O interface 1805 is connected to the following components: an input part 1806 such as a keyboard, a mouse, or the like; an output part 1807 such as a cathode ray tube (CRT), a liquid crystal display (LCD), a speaker, or the like; a storage part 1808 such as a hard disk, or the like; and a communication part 1809 including a network interface card such as a LAN card, a modem, or the like. The communication part 1809 performs communication processing via a network such as the Internet. A drive 1810 is connected to the I/O interface 1805 according to the need as well. A removable medium 1818, such as a magnetic disk, an optical disk, a magneto-optical disk, a semiconductor memory, or the like, is installed on the drive 1810 as needed, such that computer program read therefrom can be installed into the storage part 1808 as needed.

In particular, processes described above with reference to the flowcharts can be implemented as computer software programs. For example, a computer program product can be provided, which includes computer programs which are carried on a computer-readable medium, and contain program codes for performing the method shown in the flowcharts. The computer program may be downloaded and installed from the network through the communication part 1809, and/or installed from the removable medium 1811.

When executed by the central processing unit (CPU) 1801, the computer program performs the above-mentioned functions defined in the system of the present application.

It should be noted that the computer-readable medium shown in the present disclosure may be a computer-readable signal medium or a computer-readable storage medium, or any combination thereof. The computer-readable storage medium may be, for example, but not limited to, electrical, magnetic, optical, electromagnetic, infrared or semiconductor systems, apparatuses or devices, or any combination thereof. More specific examples of the computer-readable storage medium may include, but are not limited to, electrical connections with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage, a magnetic storage, or any suitable combination thereof. In the present disclosure, the computer-readable storage medium may be any tangible medium that contains or stores programs, which may be used by or in combination with a command execution system, apparatus, or device. In the present disclosure, a computer-readable signal medium may include a data signal transmitted in a baseband or as part of a carrier wave, which carries computer-readable program codes. The transmitted data signal may be represented in many forms, including, but not limited to, an electromagnetic signal, an optical signal, or any suitable combination thereof. The computer-readable signal medium may also be any computer-readable medium other than a computer-readable storage medium, which may send, propagate or transmit programs which are used by, or in conjunction with a command execution system, apparatus or device. Program codes contained on the computer-readable medium may be transmitted with any appropriate medium, which includes, but is not limited to, wireless, wired, an optical cable, RF, etc., or any suitable combination thereof.

The flowcharts and block diagrams in the drawings illustrate the possible implementation of system architecture, functions, and operations of the system, method, and computer program product.

In this regard, each block in the flowcharts or block diagrams can represent a module, a program segment, or a portion of codes, which contains one or more executable instructions for realizing specified logic functions. It should also be noted that in some alternative implementations, the functions indicated in the blocks may also be performed in other orders than that indicated in the drawings. For example, two blocks shown in succession may actually be executed almost simultaneously, or sometimes, in a reverse order, which depends on the functions. It should also be noted that each of blocks, or a combination of blocks in the block diagram or flowchart can be implemented by a dedicated hardware-based system that performs specified functions or operations, or by a combination of dedicated hardware and computer instructions.

The modules described in the present disclosure may be implemented by software, or hardware, and the described modules may also be provided in a processor. Names of the modules do not impose any limitations on the modules themselves under certain circumstances.

As another aspect, the present disclosure further provides a computer-readable medium, which may be included in the electronic device described above, or may exist alone without being mounted in the electronic device. The above-mentioned computer-readable medium carries one or more programs which, when executed by an electronic device, allow the electronic device to perform the interactive question and answer method described above.

For example, the electronic device can carry out the steps as shown in FIG. 1. In step S101, a modulation voltage of a generator-side converter is obtained. In step S102, the amplitude of the modulation voltage in k consecutive switching cycles is adjusted. In step S103, a PWM pulse signal is generated according to the adjusted modulation voltage, wherein the frequency of the generated PWM pulse signal is 1/k of the frequency of a first PWM pulse signal, k is an integer equal to or greater than 2, and the frequency of the first PWM pulse signal represents the frequency of a PWM pulse signal generated when the modulation voltage is not adjusted. In step S104, a control signal of the generator-side converter is generated according to the PWM pulse signal.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

**Claims**

1. A method of controlling a switching frequency of a wind power converter, comprising:

   obtaining (S102) a modulation voltage of a generator-side converter (211);
   adjusting (S104) an amplitude of the modulation voltage in k consecutive switching cycles;
   generating (S106) a PWM pulse signal according to the adjusted modulation voltage, wherein a frequency of the generated PWM pulse signal is 1/k of a frequency of a first PWM pulse signal, k is an integer equal to or greater than 2, and the frequency of the first PWM pulse signal represents a frequency of a PWM pulse signal generated when the modulation voltage is not adjusted; and
   generating (S108) a control signal of the generator-side converter (211) according to the PWM pulse signal;
   wherein adjusting (S104) the amplitude of the modulation voltage in the k consecutive switching cycles comprises:

   when $0<U_x\leq1/k$, $U_x^*=kU_x$, N=1, 2; and $U_x^*=0$, N=3,..., 2k;
   when $(m-1)/k<U_x\leq m/k$, $U_x^*=kU_x-m+1$, N=1; $U_x^*=1$, N=2,..., 2m-1;
   $U_x^*=kU_x-m+1$, N=2m; and $U_x^*=0$, N=2m+1,..., 2k; and
   when $(k-1)/k<U_x<1$, $U_x^*=kU_x-k+1$, N=1; and $U_x^*=1$, N=2,..., 2k-1,
   wherein $U_x$ is the modulation voltage, $U_x^*$ is the adjusted modulation voltage, m is an integer greater than 1 and less than k, and N represents a half-switching cycle in the consecutive switching cycles, N is a natural number, a value of which is taken from 2k consecutive half-switching cycles, wherein,
   for example, N=1 represents the first half-switching cycle in the two consecutive switching cycles, and so on;
   wherein the method further comprises:

   obtaining an operating rotating-speed of a wind power generator (201); and
   determining whether a difference between the operating rotating-speed and a synchronous rotating-speed is less than or equal to a predetermined threshold, and adjusting the amplitude of the modulation voltage in the k consecutive switching cycles if the difference is less than or equal to the predetermined threshold, and not adjusting the modulation voltage if the difference is greater than the predetermined threshold.

2. The method according to claim 1, wherein k=2, if

$$0<U_x\leq1/2, \qquad U_x^*=\begin{cases} 2*U_x & N=1,2 \\ 0 & N=3,4 \end{cases};$$

and if

$$1/2 < U_x < 1, \qquad U_x^* = \begin{cases} 2U_x - 1 & N = 4,1 \\ 1 & N = 2,3 \end{cases}.$$

3. The method according to claim 1, wherein k=3, if

$$0 < U_x \leq 1/3, \qquad U_x^* = \begin{cases} 3*U_x & N = 1,2 \\ 0 & N = 3,4,5,6 \end{cases};$$

if

$$1/3 < U_x \leq 2/3, \qquad U_x^* = \begin{cases} 1 & N = 2,3 \\ 3*U_x - 1 & N = 1,4 \\ 0 & N = 5,6 \end{cases};$$

and if

$$2/3 < U_x < 1, \qquad U_x^* = \begin{cases} 3U_x - 2 & N = 6,1 \\ 1 & N = 2,3,4,5 \end{cases}.$$

4. The method according to claim 1, wherein obtaining (S102) the modulation voltage of the generator-side converter (211) comprises:

   obtaining a modulation voltage output by a loop control of the generator-side converter (211); and
   injecting a common mode voltage into the modulation voltage output by the loop control to obtain the modulation voltage of the generator-side converter (211).

5. The method according to claim 4, wherein the common mode voltage $U_{cm}$ is denoted as:

$$Ucm = \max\left(\left|U_{x0}\right|\right),$$

   wherein $U_{x0}$ is the modulation voltage output by the loop control.

6. The method according to claim 1, wherein adjusting (S104) the amplitude of the modulation voltage in the k consecutive switching cycles comprises: k=2, if

$$0 < U_x \leq 1/2, \qquad U_x^* = \begin{cases} 2*U_x & N = 1,2 \\ 0 & N = 3,4 \end{cases};$$

if

$$1/2 < U_x < 1, \qquad U_x^* = \begin{cases} 2U_x - 1 & N = 4,1 \\ 1 & N = 2,3 \end{cases};$$

if

$$-1/2 \leqslant U_x < 0, \qquad U_x^* = \begin{cases} 0 & N = 4,1 \\ 2U_x & N = 2,3 \end{cases} \quad ;$$

and if

$$-1 < U_x < -1/2, \qquad U_x^* = \begin{cases} 2*U_x + 1 & N = 1,2 \\ -1 & N = 3,4 \end{cases} \quad .$$

7. The method according to claim 1, wherein adjusting (S104) the amplitude of the modulation voltage in the k consecutive switching cycles comprises: k=2, if

$$0 < U_x \leqslant 1/2, \qquad U_x^* = \begin{cases} 2*U_x & N = 1,2 \\ 0 & N = 3,4 \end{cases} \quad ;$$

if

$$1/2 < U_x < 1, \qquad U_x^* = \begin{cases} 2U_x - 1 & N = 4,1 \\ 1 & N = 2,3 \end{cases} \quad ;$$

if

$$-1/2 \leqslant U_x < 0, \qquad U_x^* = \begin{cases} 0 & N = 1,2 \\ 2U_x & N = 3,4 \end{cases} \quad ;$$

; and if

$$-1 < U_x < -1/2, \qquad U_x^* = \begin{cases} -1 & N = 4,1 \\ -2U_x - 1 & N = 2,3 \end{cases} \quad .$$

8. A control device (213, 613) of a wind power converter, comprising:

a modulation voltage obtaining module (1701), configured to obtain a modulation voltage of a generator-side converter (211);
a modulation wave adjustment module (1702), configured to adjust an amplitude of the modulation voltage in k consecutive switching cycles;
a pulse signal generating module (1703), configured to generate a PWM pulse signal according to the adjusted modulation voltage, wherein a frequency of the generated PWM pulse signal is 1/k of a frequency of a first PWM pulse signal, the frequency of the first PWM pulse signal represents a frequency of a PWM pulse signal generated when the modulation voltage is not adjusted, and k is an integer equal to or greater than 2; and
a control signal generating module (1704), configured to generate a control signal of the generator-side converter (211) according to the PWM pulse signal;
wherein when $0 < U_x \leq 1/k$, $U_x^* = kU_x$, $N=1, 2$; and $U_x^* = 0$, $N=3, ..., 2k$;
when $(m-1)/k < U_x \leq m/k$, $U_x^* = kU_x - m + 1$, $N=1$; $U_x^* = 1$, $N=2, ..., 2m-1$;
$U_x^* = kU_x - m + 1$, $N=2m$; and $U_x^* = 0$, $N=2m+1, ..., 2k$; and
when $(k-1)/k < U_x < 1$, $U_x^* = kU_x - k + 1$, $N=1$; and $U_x^* = 1$, $N=2, ..., 2k-1$,
wherein $U_x$ is the modulation voltage, $U_x^*$ is the adjusted modulation voltage, m is an integer greater than 1 and less than k, and N represents a half-switching cycle in the consecutive switching cycles, N is a natural number, a value of which is taken from 2k consecutive half-switching cycles, wherein,

for example, N=1 represents the first half-switching cycle in the two consecutive switching cycles, and so on; wherein the control device (213, 613) further comprises:

a rotating-speed obtaining module (2131), configured to obtain an operating rotating-speed of a wind power generator (201); and

a slip calculation module (2132), configured to determine whether a difference between the operating rotating-speed and a synchronous rotating-speed is less than or equal to a predetermined threshold, and send a start/output command to the modulation wave adjustment module (1702) if the difference is less than or equal to the predetermined threshold, and not send on the start/output command to the modulation wave adjustment module (1702) if the difference is greater than the predetermined threshold, wherein the modulation wave adjustment module (1702) is configured to adjust the amplitude of the modulation voltage in the k consecutive switching cycles after receiving the start/output command.

9. The control device (213, 613) according to claim 8, wherein the modulation voltage obtaining module (1701) comprises:

a voltage obtaining sub-module (2133, 6133), configured to obtain a modulation voltage output by a loop control of the generator-side converter (211); and

a common-mode voltage injection sub-module (6138), configured to inject a common mode voltage into the modulation voltage output by the loop control to obtain the modulation voltage of the generator-side converter (211).

10. The control device (213, 613) according to claim 8 or 9, wherein the modulation wave adjustment module (1702) comprises:

a section determination sub-module (2134, 6134), configured to receive the modulation voltage of the generator-side converter (211) to determine a section where the modulation voltage is located; and

an adjustment sub-module (2135, 6135), configured to adjust the amplitude of the modulation voltage in the k consecutive switching cycles according to the section where the modulation voltage is located.

11. A wind power generation system (200, 600), comprising: a wind power generator (201), a wind power converter, and the control device (213, 613) of the wind power converter according to any one of claims 8 to 10.

**Patentansprüche**

1. Verfahren zum Steuern einer Schaltfrequenz eines Windenergiekonverters, umfassend:

Erlangen (S102) einer Modulationsspannung eines generatorseitigen Umrichters (211);
Einstellen (S104) einer Amplitude der Modulationsspannung in k aufeinanderfolgenden Schaltzyklen;
Erzeugen (S106) eines PWM-Impulssignals gemäß der eingestellten Modulationsspannung, wobei eine Frequenz des erzeugten PWM-Impulssignals 1/k einer Frequenz eines ersten PWM-Impulssignals ist, k eine ganze Zahl gleich wie oder größer als 2 ist und die Frequenz des ersten PWM-Impulssignals eine Frequenz eines PWM-Impulssignals darstellt, das erzeugt wird, wenn die Modulationsspannung nicht eingestellt ist; und
Erzeugen (S108) eines Steuersignals des generatorseitigen Umrichters (211) gemäß dem PWM-Pulssignal;
wobei ein Einstellen (S104) der Amplitude der Modulationsspannung in den k aufeinanderfolgenden Schaltzyklen Folgendes umfasst:

wenn $0 < U_x \leq 1/k$, $U_x^* = kU_x$, N=1, 2; und $U_x^* = 0$, N=3,..., 2k;
wenn $(m-1)/k < U_x \leq m/k$, $U_x^* = kU_x - m + 1$, N=1; $U_x^* = 1$, N=2,..., 2m-1;
$U_x^* = kU_x - m + 1$, N=2m; und $U_x^* = 0$, N=2m+1,..., 2k; und
wenn $(k-1)/k < U_x < 1$, $U_x^* = kU_x - k + 1$, N=1; und $U_x^* = 1$, N=2,..., 2k-1, wobei $U_x$ die Modulationsspannung ist, $U_x^*$ die eingestellte Modulationsspannung ist, m eine ganze Zahl größer als 1 und kleiner als ist, und N einen Halbschaltzyklus in den aufeinanderfolgenden Schaltzyklen darstellt, N eine natürliche Zahl ist, deren Wert aus 2k aufeinanderfolgenden Halbschaltzyklen genommen wird, wobei beispielsweise N=1 den ersten Halbschaltzyklus in den zwei aufeinanderfolgenden Schaltzyklen darstellt, und so weiter;

wobei das Verfahren ferner Folgendes umfasst:

Erlangen einer Betriebsdrehzahl eines Windkraftgenerators (201); und
Bestimmen, ob eine Differenz zwischen der Betriebsdrehzahl und einer Synchrondrehzahl kleiner als oder gleich wie ein vorbestimmter Schwellenwert ist, und Anpassen der Amplitude der Modulationsspannung in den k aufeinanderfolgenden Schaltzyklen, wenn die Differenz kleiner als oder gleich wie der vorbestimmte Schwellenwert ist, und Nichtanpassen der Modulationsspannung, wenn die Differenz größer als der vorbestimmte Schwellenwert ist.

2. Verfahren nach Anspruch 1, wobei k=2, wenn

$$0 < U_x \leq 1/2, \qquad U_x^* = \begin{cases} 2*U_x & N=1,2 \\ 0 & N=3,4 \end{cases} \qquad ;$$

und wenn

$$1/2 < U_x < 1, \qquad U_x^* = \begin{cases} 2U_x - 1 & N=4,1 \\ 1 & N=2,3 \end{cases} \qquad .$$

3. Verfahren nach Anspruch 1, wobei k=3, wenn

$$0 < U_x \leq 1/3, \qquad U_x^* = \begin{cases} 3*U_x & N=1,2 \\ 0 & N=3,4,5,6 \end{cases} \qquad ;$$

wenn

$$1/3 < U_x \leq 2/3, \qquad U_x^* = \begin{cases} 1 & N=2,3 \\ 3*U_x - 1 & N=1,4 \\ 0 & N=5,6 \end{cases} \qquad ;$$

und wenn

$$2/3 < U_x < 1, \qquad U_x^* = \begin{cases} 3U_x - 2 & N=6,1 \\ 1 & N=2,3,4,5 \end{cases} \qquad .$$

4. Verfahren nach Anspruch 1, wobei ein Erlangen (S102) der Modulationsspannung des generatorseitigen Umrichters (211) Folgendes umfasst:

Erlangen einer Modulationsspannung, die von einer Schleifensteuerung des generatorseitigen Umrichters (211) ausgegeben wird; und
Einspeisen einer Gleichtaktspannung in die von der Schleifensteuerung ausgegebene Modulationsspannung, um die Modulationsspannung des generatorseitigen Umrichters (211) zu erlangen.

5. Verfahren nach Anspruch 4, wobei die Gleichtaktspannung $U_{cm}$ als bezeichnet wird: $Ucm$ = nax($|U_{X0}|$), wobei $U_{x0}$ die von der Schleifensteuerung ausgegebene Modulationsspannung ist.

6. Verfahren nach Anspruch 1, wobei ein Einstellen (S104) der Amplitude der Modulationsspannung in den k aufeinanderfolgenden Schaltzyklen Folgendes umfasst: wenn

$$0 < U_x \leq 1/2, \qquad U_x^* = \begin{cases} 2*U_x & N=1,2 \\ 0 & N=3,4 \end{cases} \qquad ;$$

wenn

$$1/2 < U_x < 1, \qquad U_x^* = \begin{cases} 2U_x - 1 & N=4,1 \\ 1 & N=2,3 \end{cases} \qquad ;$$

wenn

$$-1/2 \leq U_x < 0, \qquad U_x^* = \begin{cases} 0 & N=4,1 \\ 2U_x & N=2,3 \end{cases} \qquad ;$$

und wenn

$$-1 < U_x < -1/2, \qquad U_x^* = \begin{cases} 2*U_x + 1 & N=1,2 \\ -1 & N=3,4 \end{cases} \qquad .$$

7. Verfahren nach Anspruch 1, wobei ein Einstellen (S104) der Amplitude der Modulationsspannung in den k aufeinanderfolgenden Schaltzyklen Folgendes umfasst: k=2, wenn

$$0 < U_x \leq 1/2, \qquad U_x^* = \begin{cases} 2*U_x & N=1,2 \\ 0 & N=3,4 \end{cases} \qquad ;$$

wenn

$$1/2 < U_x < 1, \qquad U_x^* = \begin{cases} 2U_x - 1 & N=4,1 \\ 1 & N=2,3 \end{cases} \qquad ;$$

$$U_x^* = \begin{cases} 0 & N=1,2 \\ 2U_x & N=3,4 \end{cases}$$

wenn

$$-1/2 \leq U_x < 0, \qquad ;$$

und wenn

$$-1 < U_x < -1/2, \qquad U_x^* = \begin{cases} -1 & N=4,1 \\ -2U_x - 1 & N=2,3 \end{cases} \qquad .$$

8. Steuervorrichtung (213, 613) eines Windkraftkonverters, umfassend:

ein Modulationsspannung-Erlangungsmodul (1701), das konfiguriert ist, um eine Modulationsspannung eines generatorseitigen Umrichters (211) zu erlangen;

ein Modulationswellen-Einstellmodul (1702), das konfiguriert ist, um eine Amplitude der Modulationsspannung in k aufeinanderfolgenden Schaltzyklen einzustellen;

ein Impulssignal-Erzeugungsmodul (1703), das konfiguriert ist, um ein PWM-Impulssignal entsprechend der eingestellten Modulationsspannung zu erzeugen, wobei eine Frequenz des erzeugten PWM-Impulssignals 1/k einer Frequenz eines ersten PWM-Impulssignals ist, die Frequenz des ersten PWM-Impulssignals eine Frequenz eines PWM-Impulssignals darstellt, das erzeugt wird, wenn die Modulationsspannung nicht eingestellt wird, und k eine ganze Zahl gleich wie oder größer als 2 ist; und

ein Steuersignal-Erzeugungsmodul (1704), das konfiguriert ist, um ein Steuersignal des generatorseitigen Umrichters (211) gemäß dem PWM-Pulssignal zu erzeugen;

wenn $0<U_x\leq 1/k$, $U_x^*=kU_x$, N=1, 2; und $U_x^*=0$, N=3,..., 2k;

wenn $(m-1)/k<U_x\leq m/k$, $U_x^*=kU_x-m+1$, N=1; $U_x^*=1$, N=2,..., 2m-1;

$U_x^*=kU_x-m+1$, N=2m; und $U_x^*=0$, N=2m+1,..., 2k; und

wenn $(k-1)/k<U_x<1$, $U_x^*=kU_x-k+1$, N=1; und $U_x^*=1$, N=2,..., 2k-1,

wobei $U_x$ die Modulationsspannung ist, $U_x^*$ die eingestellte Modulationsspannung ist, m eine ganze Zahl größer als 1 und kleiner als k ist, und N einen Halbschaltzyklus in den aufeinanderfolgenden Schaltzyklen darstellt, N eine natürliche Zahl ist, deren Wert aus 2k aufeinanderfolgenden Halbschaltzyklen genommen wird, wobei beispielsweise N=1 den ersten Halbschaltzyklus in den zwei aufeinanderfolgenden Schaltzyklen darstellt, und so weiter;

wobei die Steuervorrichtung (213, 613) ferner Folgendes umfasst:

ein Drehzahl-Erlangungsmodul (2131), das konfiguriert ist, um eine Betriebsdrehzahl eines Windkraftgenerators (201) zu erlangen; und

ein Schlupfberechnungsmodul (2132), das konfiguriert ist, um zu bestimmen, ob eine Differenz zwischen der Betriebsdrehzahl und einer Synchrondrehzahl kleiner als oder gleich wie ein vorbestimmter Schwellenwert ist, und einen Start-/Ausgabebefehl an das Modulationswelleneinstellmodul (1702) zu senden, wenn die Differenz kleiner als oder gleich wie der vorbestimmte Schwellenwert ist, und den Start-/Ausgabebefehl nicht an das Modulationswelleneinstellmodul (1702) zu senden, wenn die Differenz größer als der vorbestimmte Schwellenwert ist,

wobei das Modulationswellen-Einstellungsmodul (1702) konfiguriert ist, um die Amplitude der Modulationsspannung in den k aufeinanderfolgenden Schaltzyklen nach Empfangen des Start-/Ausgabebefehls einzustellen.

**9.** Steuervorrichtung (213, 613) nach Anspruch 8, wobei das Modulationsspannung-Erlangungsmodul (1701) Folgendes umfasst:

ein Spannungserlangungs-Untermodul (2133, 6133), das konfiguriert ist, um eine Modulationsspannung zu erlangen, die von einer Regelschleife des generatorseitigen Umrichters (211) ausgegeben wird; und

ein Gleichtaktspannungs-Einspeisungsuntermodul (6138), das konfiguriert ist, um eine Gleichtaktspannung in die von der Schleifensteuerung ausgegebene Modulationsspannung einzuspeisen, um die Modulationsspannung des generatorseitigen Umrichters (211) zu erlangen.

**10.** Steuervorrichtung (213, 613) nach Anspruch 8 oder 9, wobei das Modulationswellen-Einstellungsmodul (1702) Folgendes umfasst:

ein Abschnittsbestimmungs-Untermodul (2134, 6134), das konfiguriert ist, um die Modulationsspannung des generatorseitigen Umrichters (211) zu empfangen, um einen Abschnitt zu bestimmen, in dem sich die Modulationsspannung befindet; und

ein Einstellungsuntermodul (2135, 6135), das konfiguriert ist, um die Amplitude der Modulationsspannung in den k aufeinanderfolgenden Schaltzyklen entsprechend dem Abschnitt, in dem sich die Modulationsspannung befindet, einzustellen.

**11.** Windenergieerzeugungssystem (200, 600), umfassend: einen Windkraftgenerator (201), einen Windkraftumrichter und die Steuervorrichtung (213, 613) des Windenergiekonverters nach einem der Ansprüche 8 bis 10.

**Revendications**

1. Procédé de commande d'une fréquence de commutation d'un convertisseur de puissance éolienne, comprenant :

   l'obtention (S102) d'une tension de modulation d'un convertisseur côté générateur (211) ;
   le réglage (S104) d'une amplitude de la tension de modulation dans k cycles de commutation consécutifs ;
   la génération (S106) d'un signal d'impulsion PWM selon la tension de modulation réglée, dans lequel une fréquence du signal d'impulsion PWM généré est égale à 1/k d'une fréquence d'un premier signal d'impulsion PWM, k est un entier égal ou supérieur à 2, et la fréquence du premier signal d'impulsion PWM représente une fréquence d'un signal d'impulsion PWM généré lorsque la tension de modulation n'est pas réglée ; et
   la génération (S108) d'un signal de commande du convertisseur côté générateur (211) selon le signal d'impulsion PWM ;
   dans lequel le réglage (S104) de l'amplitude de la tension de modulation dans les k cycles de commutation consécutifs comprend :

   lorsque $0 < U_x \leq 1/k$, $U_x{}^* = kU_x$, N = 1, 2 ; et $U_x{}^* = 0$, N = 3, ..., 2k ;
   lorsque $(m-1)/k < U_x \leq m/k$, $U_x{}^* = kU_x-m+1$, N = 1 ; $U_x{}^* = 1$, N = 2, ..., 2m-1 ;
   $U_x{}^* = kU_x-m+1$, N = 2m ; et $U_x{}^* = 0$, N = 2m+1, ..., 2k; et
   lorsque $(k-1)/k < U_x < 1$, $U_x{}^* = kU_x-k+1$, N = 1 ; et $U_x{}^* = 1$, N = 2, ..., 2k-1,
   où $U_x$ est la tension de modulation, $U_x{}^*$ est la tension de modulation réglée, m est un entier supérieur à 1 et inférieur à k, et N représente un cycle de demi-commutation parmi les cycles de commutation consécutifs, N est un nombre naturel dont une valeur est prise parmi 2k cycles de demi-commutation consécutifs, par exemple où N=1 représente le premier cycle de demi-commutation parmi les deux cycles de commutation consécutifs, et ainsi de suite ;
   dans lequel le procédé comprend en outre :

   l'obtention d'une vitesse de rotation de fonctionnement d'un générateur de puissance éolienne (201) ; et
   la détermination précisant si une différence entre la vitesse de rotation de fonctionnement et une vitesse de rotation synchrone est inférieure ou égale à un seuil prédéterminé, et le réglage de l'amplitude de la tension de modulation dans les k cycles de commutation consécutifs si la différence est inférieure ou égale au seuil prédéterminé, et le non réglage de la tension de modulation si la différence est supérieure au seuil prédéterminé.

2. Procédé selon la revendication 1, dans lequel k = 2, *si*

$$0 < U_x \leq 1/2, \quad U_x^* = \begin{cases} 2 * U_x & N = 1,2 \\ 0 & N = 3,4 \end{cases};$$

*et si*

$$1/2 < U_x < 1, \quad U_x^* = \begin{cases} 2U_x - 1 & N = 4,1 \\ 1 & N = 2,3 \end{cases}.$$

3. Procédé selon la revendication 1, dans lequel k = 3, *si*

$$0 < U_x \leq 1/3, \quad U_x^* = \begin{cases} 3 * U_x & N = 1,2 \\ 0 & N = 3,4,5,6 \end{cases};$$

*si*

$$1/3 < U_x \leq 2/3, \quad U_x^* = \begin{cases} 1 & N = 2,3 \\ 3 * U_x - 1 & N = 1,4 \\ 0 & N = 5,6 \end{cases};$$

*et si*

$$2/3 < U_x < 1, \qquad U_x^* = \begin{cases} 3U_x - 2 & N = 6,1 \\ 1 & N = 2,3,4,5 \end{cases}.$$

4. Procédé selon la revendication 1, dans lequel l'obtention (S102) de la tension de modulation du convertisseur côté générateur (211) comprend :

l'obtention d'une tension de modulation délivrée par une commande en boucle du convertisseur côté générateur (211) ; et
l'injection d'une tension en mode commun dans la tension de modulation délivrée par la commande en boucle pour obtenir la tension de modulation du convertisseur côté générateur (211).

5. Procédé selon la revendication 4, dans lequel la tension en mode commun $U_{cm}$ est désignée par : $U_{cm} = \max(|U_{x0}|)$ où $U_{X0}$ est la tension de modulation délivrée par la commande en boucle.

6. Procédé selon la revendication 1, dans lequel le réglage (S104) de l'amplitude de la tension de modulation dans les k cycles de commutation consécutifs comprend : k=2, *si*

$$0 < U_x \le 1/2, \qquad U_x^* = \begin{cases} 2 * U_x & N = 1,2 \\ 0 & N = 3,4 \end{cases};$$

*si*

$$1/2 < U_x < 1, \qquad U_x^* = \begin{cases} 2U_x - 1 & N = 4,1 \\ 1 & N = 2,3 \end{cases};$$

*si*

$$-1/2 \le U_x < 0, \qquad U_x^* = \begin{cases} 0 & N = 4,1 \\ 2U_x & N = 2,3 \end{cases};$$

*et si*

$$-1 < U_x < -1/2, \qquad U_x^* = \begin{cases} 2 * U_x + 1 & N = 1,2 \\ -1 & N = 3,4 \end{cases}.$$

7. Procédé selon la revendication 1, dans lequel le réglage (S104) de l'amplitude de la tension : de modulation dans les k cycles de commutation consécutifs comprend : k=2, *si*

$$0 < U_x \le 1/2, \qquad U_x^* = \begin{cases} 2 * U_x & N = 1,2 \\ 0 & N = 3,4 \end{cases};$$

*si*

$$1/2 < U_x < 1, \qquad U_x^* = \begin{cases} 2U_x - 1 & N = 4,1 \\ 1 & N = 2,3 \end{cases};$$

*si*

$$-1/2 \leq U_x < 0, \qquad U_x^* = \begin{cases} 0 & N = 1,2 \\ 2U_x & N = 3,4 \end{cases};$$

et si

$$-1 < U_x < -1/2, \qquad U_x^* = \begin{cases} -1 & N = 4,1 \\ -2U_x - 1 & N = 2,3 \end{cases}.$$

8. Dispositif de commande (213, 613) d'un convertisseur de puissance éolienne, comprenant :

un module d'obtention de tension de modulation (1701), configuré pour obtenir une tension de modulation d'un convertisseur côté générateur (211) ;

un module de réglage d'onde de modulation (1702), configuré pour régler une amplitude de la tension de modulation dans k cycles de commutation consécutifs ;

un module de génération de signaux d'impulsion (1703), configuré pour générer un signal d'impulsion PWM selon la tension de modulation réglée, dans lequel une fréquence du signal d'impulsion PWM généré est égale à 1/k d'une fréquence d'un premier signal d'impulsion PWM, la fréquence du premier signal d'impulsion PWM représente une fréquence d'un signal d'impulsion PWM généré lorsque la tension de modulation n'est pas réglée, et k est un entier égal ou supérieur à 2 ; et

un module de génération de signaux de commande (1704), configuré pour générer un signal de commande du convertisseur côté générateur (211) selon le signal d'impulsion PWM ;

dans lequel, lorsque $0 < U_x \leq 1/k$, $U_x^* = kU_x$, N = 1, 2 ; et $U_x^* = 0$, N = 3, ..., 2k ;

lorsque $(m-1)/k < U_x \leq m/k$, $U_x^* = kU_x-m+1$, N = 1 ; $U_x^* = 1$, N = 2, ..., 2m-1;

$U_x^* = kU_x-m+1$, N = 2m ; et $U_x^* = 0$, N = 2m+1, ..., 2k; et

lorsque $(k-1)/k < U_x < 1$, $U_x^* = kU_x-k+1$, N = 1 ; et $U_x^* = 1$, N = 2, ..., 2k-1,

où $U_x$ est la tension de modulation, $U_x^*$ est la tension de modulation réglée, m est un entier supérieur à 1 et inférieur à k, et N représente un cycle de demi-commutation parmi les cycles de commutation consécutifs, N est un nombre naturel dont une valeur est prise parmi 2k cycles de demi-commutation consécutifs, par exemple où N=1 représente le premier cycle de demi-commutation parmi les deux cycles de commutation consécutifs, et ainsi de suite ;

dans lequel le dispositif de commande (213, 613) comprend en outre :

un module d'obtention de vitesse de rotation (2131), configuré pour obtenir une vitesse de rotation de fonctionnement d'un générateur de puissance éolienne (201) ; et

un module de calcul de glissement (2132), configuré pour déterminer si une différence entre la vitesse de rotation de fonctionnement et une vitesse de rotation synchrone est inférieure ou égale à un seuil prédéterminé, pour envoyer une instruction de démarrage/sortie au module de réglage d'onde de modulation (1702) si la différence est inférieure ou égale au seuil prédéterminé, et pour ne pas envoyer l'instruction de démarrage/sortie au module de réglage d'onde de modulation (1702) si la différence est supérieure au seuil prédéterminé,

dans lequel le module de réglage d'onde de modulation (1702) est configuré pour régler l'amplitude de la tension de modulation dans les k cycles de commutation consécutifs après réception de l'instruction de démarrage/sortie.

9. Dispositif de commande (213, 613) selon la revendication 8, dans lequel la module d'obtention de tension de modulation (1701) comprend :

un sous-module d'obtention de tension (2133, 6133), configuré pour obtenir une tension de modulation délivrée par un commande en boucle du convertisseur côté générateur (211) ; et

un sous-module d'injection de tension en mode commun (6138), configuré pour injecter une tension en mode commun dans la tension de modulation délivrée par la commande en boucle pour obtenir la tension de modulation du convertisseur côté générateur (211).

10. Dispositif de commande (213, 613) selon la revendication 8 ou 9, dans lequel le module de réglage d'onde de modulation (1702) comprend :

un sous-module de détermination de section (2134, 6134), configuré pour recevoir la tension de modulation du convertisseur côté générateur (211) pour déterminer une section où se situe la tension de modulation ; et

un sous-module de réglage (2135, 6135), configuré pour régler l'amplitude de la tension de modulation dans les k cycles de commutation consécutifs selon la section où se situe la tension de modulation.

11. Système de génération d'énergie éolienne (200, 600), comprenant : un générateur de puissance éolienne (201), un convertisseur de puissance éolienne, et le dispositif de commande (213, 613) du convertisseur de puissance éolienne selon l'une quelconque des revendications 8 à 10.

Obtaining a modulation voltage of a generator-side converter — S102

Adjusting the amplitude of the modulation voltage in k consecutive switching cycles — S104

Generating a PWM pulse signal according to the adjusted modulation voltage — S106

Generating a control signal of the generator-side converter according to the PWM pulse signal — S108

FIG. 1

**FIG. 2**

EP 3 796 541 B1

$U_x$ → Determining section where the modulation voltage is located

→ section1 → Adjusting the amplitude of the modulating voltage to $2U_x$-1 or 0 → Reducing the switching frequency to 1/2 of the original switching frequency

→ section2 → Adjusting the amplitude of the modulating voltage to $2U_x$-1 or 1

**FIG. 3**

FIG. 4

27

FIG. 5

FIG. 6A

FIG. 6B

30

$$0 < U_x \leqslant 1/3$$

$3U_x$

$U_x$

N=1 | N=2 | N=3 | N=4 | N=5 | N=6 | N=1 | N=2 | N=3 | N=4 | N=5

601

602

FIG. 7

$$1/3 < U_x \leqq 2/3$$

FIG. 8

$$2/3 < U_x < 1$$

FIG. 9

$$0 < U_x \leq 1/2$$

$2U_x$

$U_x$

N=1 N=2 N=3 N=4 N=1 N=2 N=3 N=4 N=1 N=2 N=3

901

902

FIG. 10

$$1/2 < U_x < 1$$

FIG. 11

FIG. 12

FIG. 13

$$0 < Ux \leqslant 1/2$$

$2U_x$

$U_x$

N=1 N=2 N=3 N=4 N=1 N=2 N=3 N=4 N=1 N=2 N=3

1301

1302

FIG. 14

$$1/2 < U_x < 1$$

FIG. 15

$$-1/2 \leqq U_x < 0$$

FIG. 16

$-1 < U_x < -1/2$

$-2U_x - 1$

$U_x$

$-1$

N=3 N=4 N=1 N=2 N=3 N=4 N=1 N=2 N=3 N=4

1601

1602

FIG. 17

1700

Control Device of Wind Power
Converter

Modulation Voltage Obtaining
Module                          1701

Modulation Wave Adjustment
Module                          1702

Pulse Signal Generating Module   1703

Control Signal Generating Module  1704

FIG. 18

1800

FIG. 19

# EP 3 796 541 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2010250067 A1, MATSUMURA TATSUO [JP]
- EP 3327918 A1, HITACHIINDUSTRY EQUIPMENT SYSTEMS CO LTD [JP])
- WO 2017013125 A1, ABB SCHWEIZ AG [CH])

### Non-patent literature cited in the description

- **XIANG DAWEI et al.** Switching Frequency Dynamic Control for DFIG Wind Turbine Performance Improvement Around Synchronous Speed. *IEEE TRANSACTIONS ON POWER ELECTRONICS, INSTITUTE OF ELECTRICAL AND ELECTRONICS ENGINEERS, USA,* 01 September 2017, vol. 32, ISSN 0885-8993, 7271-7283